(19) Europäisches Patentamt
European Patent Office
Office européen des brevets

(11) **EP 3 400 553 B1**

(12) **EUROPÄISCHE PATENTSCHRIFT**

(45) Veröffentlichungstag und Bekanntmachung des Hinweises auf die Patenterteilung:
**29.01.2020 Patentblatt 2020/05**

(21) Anmeldenummer: **16826744.1**

(22) Anmeldetag: **27.12.2016**

(51) Int Cl.:
*G06F 21/33* (2013.01)     *G06F 21/35* (2013.01)
*H04L 29/06* (2006.01)

(86) Internationale Anmeldenummer:
**PCT/EP2016/082727**

(87) Internationale Veröffentlichungsnummer:
**WO 2017/118587 (13.07.2017 Gazette 2017/28)**

(54) **ZUGRIFFSKONTROLLE MITTELS AUTHENTISIERUNGSSERVER**

ACCESS CONTROL BY MEANS OF AUTHENTICATION SERVER

CONTRÔLE D'ACCÈS AU MOYEN D'UN SERVEUR D'AUTHENTIFICATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.01.2016 DE 102016200003**

(43) Veröffentlichungstag der Anmeldung:
**14.11.2018 Patentblatt 2018/46**

(73) Patentinhaber: **Bundesdruckerei GmbH**
**10969 Berlin (DE)**

(72) Erfinder: **MORGNER, Frank**
**15537 Grünheide (DE)**

(74) Vertreter: **Richardt Patentanwälte PartG mbB**
**Wilhelmstraße 7**
**65185 Wiesbaden (DE)**

(56) Entgegenhaltungen:
• "Advanced Security Mechanisms for Machine Readable Travel Documents and eIDAS Token -", , 3. Februar 2015 (2015-02-03), XP055239778, Gefunden im Internet: URL:https://www.bsi.bund.de/SharedDocs/Downloads/EN/BSI/Publications/TechGuidelines/TR03110/BSI_TR-03110_Part-2-V2_2.pdf?__blob=publicationFile&v=1 [gefunden am 2016-01-08]
• "Advanced Security Mechanisms for Machine Readable Travel Documents and eIDAS Token -", , 6. Februar 2015 (2015-02-06), XP055250604, Gefunden im Internet: URL:https://www.bsi.bund.de/SharedDocs/Downloads/EN/BSI/Publications/TechGuidelines/TR03110/BSI_TR-03110_Part-4_V2-2.pdf?__blob=publicationFile&v=1 [gefunden am 2016-02-16]
• "Advanced Security Mechanisms for Machine Readable Travel Documents and eIDAS Token -", , 6. Februar 2015 (2015-02-06), XP055250599, Gefunden im Internet: URL:https://www.bsi.bund.de/SharedDocs/Downloads/EN/BSI/Publications/TechGuidelines/TR03110/BSI_TR-03110_Part-3-V2_2.pdf?__blob=publicationFile&v=1 [gefunden am 2016-02-16]
• "Advanced Security Mechanisms for Machine Readable Travel Documents and eIDAS Token -", , 26. Februar 2015 (2015-02-26), XP055250381, Gefunden im Internet: URL:https://www.bsi.bund.de/SharedDocs/Downloads/EN/BSI/Publications/TechGuidelines/TR03110/BSI_TR-03110_Part-1_V2-2.pdf?__blob=publicationFile&v=1 [gefunden am 2016-02-16]
• KAIN M ET AL: "SAML 2.0, ein Tutorium- Teil 1: Theorie", , Bd. 5/2007 31. Dezember 2007 (2007-12-31), Seiten 55-59, XP002598178, Gefunden im Internet: URL:http://www.acando.de/Global/GER/fachartikel_ger/kain_keller_JS_05_07.pdf [gefunden am 2010-08-26]

EP 3 400 553 B1

**Beschreibung**

Die Erfindung betrifft ein computerimplementiertes Verfahren zur Zugriffskontrolle, einen System zur Zugriffskontrolle, ein Verfahren zur Freigabe eines Zugriffs auf eine zugriffsbeschränkte Sicherungseinrichtung sowie ein Sicherheitssystem.

Sicherungseinrichtungen, beispielsweise Alarmanlagen oder Verriegelungsanlagen, haben sowohl im privaten als auch im gewerblichen Umfeld eine hohe Verbreitung gefunden. Sicherungseinrichtungen dienen beispielsweise dazu, ausschließlich einem vordefinierten Personenkreis Zutritt zu einem Gebäude oder einem Gebäudeteil zu ermöglichen. Damit eine bestimmte Person Zutritt zur Sicherungseinrichtung bekommt, ist eine Authentifizierung der Person gegenüber der Sicherungseinrichtung erforderlich. Die Authentifizierung der Person kann beispielsweise mittels Passworteingabe oder Erfassung biometrischer Merkmale über ein Terminal oder mittels einer Berechtigungskarte, die Daten mit dem Terminal austauscht, erfolgen.

Vorbekannte Authentifizierungsverfahren weisen den Nachteil auf, dass zur Eingabe des Passworts, zum Erfassen biometrischer Merkmale oder zum sicheren Datenaustausch zwischen Berechtigungskarte, Terminal und weiteren Komponenten oftmals einiges an Zeit erforderlich ist. Entsprechende Authentifizierungsprozesse können mehrere Sekunden, teilweise Minuten erfordern. Vorbekannte Ansätze diese Verfahren zu beschleunigen, gehen in der Regel mit einer Verringerung der Sicherheit einher.

Ein weiterer Nachteil bei bekannten Sicherungseinrichtungen ist, dass die Verwaltung der Zugriffsberechtigungen einer Vielzahl von Nutzern komplex ist. Dies gilt auch für die Verwaltung einer Vielzahl von Terminals, die beispielsweise zur Sicherung eines Gebäudes notwendig sind. Jedes Terminal muss so konfiguriert sein und über entsprechende kryptographische Daten verfügen, dass eine sichere Authentifizierung gewährleistet wird. Eine dezentrale Struktur mit einer Vielzahl autarker Terminals führt zu einem erheblichen Wartungsaufwand, wenn beispielsweise Einstellungen und/oder Daten geändert werden müssen. Eine zentrale Steuerung der Authentifizierungsprozesse über eine Netzwerkanbindung des Terminals wiederum kann erhebliche Latenzzeiten verursachen durch das Ausführen komplexer und/oder umfangreicher Kommunikationsprozesse über das Netzwerk.

Die vierteilige technische Richtlinie des Bundesamts für Sicherheit in der Informationstechnik BSI TR-03110 "Advanced Security Mechanisms for Machine Readable Travel Documents and eIDAS Token", Version 2.20, 26. Februar 2015, spezifiziert Sicherheitsmechanismen für maschinenlesbare Reisedokumente und eIDAS Token. Die Spezifikation bildet insbesondere die Grundlage für die Sicherheitsmechanismen des deutschen Personalausweises und des Aufenthaltstitels sowie europäischer Reisepässe und Führerscheine, und enthält darüber hinaus weitere Mechanismen.

Der Artikel Kain M. et al.: "SAML 2.0, ein Tutorium - Teil 1: Theorie" umfasst eine allgemeine, theoretische Einführung in die Security Assertion Markup Language 2.0 (SAML).

Der Erfindung liegt die Aufgabe zugrunde, ein verbessertes computerimplementiertes Verfahren zur Kontrolle des Zugriffs auf ein in einem ID-Token gespeichertes Attribut, ein verbessertes System zur Zugriffskontrolle, ein verbessertes Verfahren zur Freigabe eines Zugriffs auf eine zugriffsbeschränkte Sicherungseinrichtung sowie ein verbessertes Sicherheitssystem zu schaffen.

Die der Erfindung zugrunde liegende Aufgabe wird durch die Merkmale der unabhängigen Patentansprüche gelöst. Bevorzugte Ausführungsformen der Erfindung sind in den abhängigen Patentansprüchen angegeben.

Ausführungsformen der Erfindung betreffen ein computerimplementiertes Verfahren zur Kontrolle eines Zugriffs eines Terminals auf ein in einem ID-Token gespeichertes Attribut. Das Verfahren umfasst eine Authentisierung des Terminals durch das ID-Token und eine Authentisierung des ID-Tokens durch das Terminal umfasst, wobei eine Authentisierung des Terminals durch das ID-Token über einen Authentisierungsserver erfolgt, welcher einen dem Terminal zugeordneten statischen privaten Schlüssel umfasst. Die Authentisierung über den Authentisierungsserver umfasst:

-    Senden eines ersten Zugriffstokens von dem Terminal an das ID-Token,
-    Verifizierung einer ersten Signatur des ersten Zugriffstokens mit einem dem Terminal zugeordneten statischen öffentlichen Schlüssel durch das ID-Token,
-    Erzeugen und Senden eines sitzungsgebundenen temporären öffentlichen Schlüssels durch das Terminal an das ID-Token,
-    Erzeugen und Senden eines zufälligen ersten Geheimnisses durch das ID-Token an das Terminal,
-    Weiterleiten des zufälligen ersten Geheimnisses durch das Terminal an den Authentisierungsserver und Senden des sitzungsgebundenen temporären öffentlichen Schlüssels des Terminals an den Authentisierungsserver,
-    Erstellen einer zweiten Signatur des zufälligen ersten Geheimnisses durch den Authentisierungsserver mit dem dem Terminal zugeordneten statischen privaten Schlüssel und dem sitzungsgebundenen temporären öffentlichen Schlüssel des Terminals und Senden der zweiten Signatur an das Terminal,
-    Weiterleiten der zweiten Signatur durch das Terminal an das ID-Token,
-    Verifizierung der zweiten Signatur des zufälligen ersten Geheimnisses durch das ID-Token unter Verwendung des zufälligen ersten Geheimnisses, des sitzungsgebundenen temporären öffentlichen Schlüssels des Terminals und des dem Terminal zugeordneten statischen öffentlichen Schlüssels,

- nach erfolgreicher Verifizierung der ersten und zweiten Signatur, Freigabe des Zugriffs des Terminals auf das Attribut.

Der Zugriff des Terminals auf das Attribut erfolgt dabei nur unter der Voraussetzung der erfolgreichen Authentisierung des ID-Tokens durch das Terminal.

Der Begriff "ID-Token" bezeichnet eine Vorrichtung, wie beispielsweise ein tragbares elektronisches Gerät, zum Beispiel einen sogenannten USB-Stick, oder ein Dokument, insbesondere ein Wert- oder Sicherheitsdokument.

Unter einem "Dokument" werden papierbasierte und/oder kunststoffbasierte Dokumente verstanden, wie zum Beispiel Ausweisdokumente, insbesondere Reisepässe, Personalausweise, Visas sowie Führerscheine, Fahrzeugscheine, Fahrzeugbriefe, Firmenausweise, Gesundheitskarten oder andere ID-Dokumente sowie auch Chipkarten, Zahlungsmittel, insbesondere Bankkarten und Kreditkarten, Frachtbriefe oder sonstige Berechtigungsnachweise, in die ein Datenspeicher zur Speicherung von zumindest einem Attribut integriert ist.

Unter einem "Attribut" wird im Folgenden ein Datenwert, zum Beispiel eine Zahl oder ein Text, verstanden. Bei dem Attribut kann es sich um eine Angabe bezüglich der Identität eines Nutzers handeln, dem das ID-Token zugeordnet ist, insbesondere bezüglich dessen sogenannter digitaler Identität. Beispielsweise können Name, Vorname, Adresse des Nutzers Attribute darstellen. Ein Attribut kann auch Daten beinhalten, die zur Überprüfung der Berechtigung des Nutzers zur Inanspruchnahme eines bestimmten Online-Dienstes dienen, wie zum Beispiel das Alter des Nutzers, wenn dieser einen Onlinedienst in Anspruch nehmen möchte, der einer bestimmten Altersgruppe vorbehalten ist, oder ein anders Attribut, welches die Zugehörigkeit des Nutzers zu einer bestimmten Gruppe dokumentiert, welche zur Nutzung des Onlinedienstes berechtigt ist. Ein "Attribut" kann auch einen Datenwert bezeichnen, welcher eine Zugangsberechtigung zu einer zugriffsbeschränkten Sicherungseinrichtung umfasst. In diesem Zusammenhang kann das Attribut ebenfalls eine bestimmte Gruppenzugehörigkeit angeben, wobei der Zugriff auf die zugriffsbeschränkte Sicherungseinrichtung von der besagten Gruppenzugehörigkeit abhängt.

Eine "zugriffsbeschränkte Sicherungseinrichtung" wird im Rahmen der vorliegenden Beschreibung als eine Einrichtung verstanden, die den Zugang zu bestimmten räumlichen Bereichen oder auch den Zugriff auf bestimmte Daten kontrolliert. Ein Zugriff ist nur nach Nachweis einer entsprechenden Berechtigung mittels des ID-Tokens möglich. Als Sicherungseinrichtung wird somit im Folgenden jegliches softwarebasierte, firmwarebasierte und/oder hardwarebasierte System bezeichnet, welches einem Nutzer nur unter der Voraussetzung einer erfolgreichen Authentifizierung gegenüber diesem System Zugriff auf bestimmte geschützte Objekte wie etwa Daten, Funktionalitäten oder räumliche Bereiche gewährt. Eine Sicherungseinrichtung kann beispielsweise eine Alarmanlage, eine Verriegelungsanlage, ein Gebäude, einen Raum, ein Gerät, insbesondere ein Datenverarbeitungsgerät, eine Komponente eines Geräts, ein Softwareprogramm und/oder ein Softwaremodul umfassen. Falls die elektronische Identifikation des Nutzers diesen Nutzer gegenüber einem Zugangsmanagementserver als berechtigt ausweist, unterbindet der Zugangsmanagementserver bzw. die mit diesem in Kommunikation stehende Sicherungseinrichtung für diesen Nutzer beispielsweise ein Auslösen eines Alarms der Alarmanlage bei Zugriff auf die Sicherungseinrichtung, entriegelt die Verriegelungsanlage, gewährt Zugang zu dem Gebäude oder dem Raum und/oder gewährt Zugriff auf das Gerät, auf die Komponente des Geräts, auf das Softwareprogramm und/oder das Softwaremodul.

Ein "Zugangsmanagementserver" wird im Folgenden als ein Server verstanden, welcher die für einen Zugang und/oder Zugriff der oben genannten Art notwendigen Berechtigungen verwaltet und gegebenenfalls gegenüber einer internen Datenbank abgleicht.

Unter einem "statischen" Schlüssel wird im Folgenden ein kryptografischer Schlüssel bzw. Datenwert verstanden, welcher in einem nichtflüchtigen Speichermedium gespeichert ist und für mehr als nur einer Sitzung Verwendung finden kann. Im Gegensatz dazu werden Sitzungsschlüssel, d.h. sitzungsgebundene, temporäre Schlüssel bzw. Datenwerte, nur für eine Sitzung generiert und nicht permanent gespeichert, sodass sie in einer weiteren Sitzung nicht mehr verwendet werden können. Entsprechende Schlüssel bzw. Datenwerte werden auch als ephemer bezeichnet.

Unter einem "permanenten" Zertifikat wird im Folgenden ein digitales Zertifikat verstanden, weiches für mehr als nur einer Sitzung Verwendung finden kann. Ein permanentes Zertifikat kann beispielsweise einen statischen öffentlichen Schlüssel umfassen und mittels einem statischen privaten Schlüssel signiert sein. Im Gegensatz dazu werden temporäre Zertifikate mittels temporärer Schlüssel nur für eine Sitzung generiert, sodass sie in einer weiteren Sitzung nicht mehr verwendet werden können.

Unter einem "Zugriffstoken" wird im Folgenden ein Softwareelement verstanden, welches dazu konfiguriert ist eine Zugriffsberechtigung auf eine Informatikeinrichtung, wie einen Computer, Server, Terminal, Chipkarte nachzuweisen. Insbesondere kann es sich bei dem Zugriffstoken um ein Softwareelement handeln, für welches eine Zugriffsberechtigung durch die Informatikeinrichtung verifiziert wurde und welches auf der Informatikeinrichtung hinterlegt ist. Bei einem Zugriffstoken kann es sich beispielsweise um ein permanentes Zertifikat oder einen aus einem permanenten Zertifikat abgeleiteten Hash-Wert handeln. Nach Ausführungsformen umfasst der Hash-Wert einen Hash von Metadaten des permanenten Zertifikats. Bei einer Signatur des Zugriffstokens kann es sich beispielsweise um eine Signatur aus dem permanenten Zertifikat handeln, aus dem der Hash-Wert abgeleitet ist, oder um eine Signatur des abgeleiteten Hash-Werts selbst.

Unter einem "Zertifikat" wird hier ein digitales Zertifikat verstanden, welches auch als Public-Key-Zertifikat bezeichnet wird. Bei einem Zertifikat handelt es sich um strukturierte Daten, die dazu dienen, einen öffentlichen Schlüssel eines asymmetrischen Kryptosystems einer Identität, wie zum Beispiel einer Person oder einer Vorrichtung, zuzuordnen. Ein Zertifikat kann beispielsweise einen öffentlichen Schlüssel beinhaltet und signiert sein. Alternativ sind auch Zertifikate basierend auf zeroknowledge Kryptosystemen möglich. Beispielsweise kann das Zertifikat dem Standard X.509 oder einem anderen Standard entsprechen. Beispielsweise handelt es sich bei dem Zertifikat um ein Card Verifiable Certificate (CVC).

Das Zertifikat kann Metadaten umfassen, die beispielsweise spezifizieren, für welches Attribut oder welche Attribute des Nutzers, die in dem geschützten Speicherbereich des ID-Tokens gespeichert sind, ein Lesegerät bzw. Lesemodul zur Durchführung eines Lesezugriffs berechtigt ist. Ferner können durch Metadaten auch die jeweiligen Schreibrechte für Attributspezifikationen oder Attribute in einem Zertifikat definiert sein. Ein solches Zertifikat wird auch als Berechtigungszertifikat bezeichnet.

Digitale Zertifikate sind bei der Absicherung elektronischer Kommunikation durch asymmetrische kryptographische Verfahren ein bewährtes Mittel um die Echtheit und die Zuordnung der kryptographischen Mittel zu einer bestimmten Person nachzuweisen. Zertifikate sind strukturierte Daten, die die Authentizität und/oder weitere Eigenschaften des Eigentümers eines öffentlichen Schlüssels (Signaturprüfschlüssel) dokumentieren und durch eine unabhängige, glaubwürdige Instanz (Zertifizierungsdienstanbieter/ZDA), im Allgemeinen die das Zertifikat zuteilende Zertifizierungsstelle, bestätigen. Zertifikate werden in der Regel einem breiten Personenkreis zur Verfügung gestellt um diesem eine Prüfung elektronischer Signaturen auf Authentizität und Gültigkeit zu ermöglichen. Ein Zertifikat kann einer elektronischen Signatur zum Beispiel zugeordnet werden, wenn der zu dem öffentlichen Schlüssel gehörende private Schlüssel zur Generierung der zu prüfenden elektronischen Signatur verwendet wurde. Dadurch, dass ein ZDA ein Zertifikat in Assoziation mit einem öffentlichen Schlüssel der Allgemeinheit zur Verfügung stellt, ermöglicht ein ZDA den Nutzern asymmetrischer Kryptosysteme den öffentlichen Schlüssel einer Identität, beispielsweise einer Person, einer Organisation, einem Energie- oder Computersystem, zuzuordnen.

Asymmetrische Schlüsselpaare werden für eine Vielzahl von Kryptosystemen eingesetzt und spielen auch bei der Signatur elektronischer Dokumente eine wichtige Rolle. Ein asymmetrisches Schlüsselpaar besteht aus einem privaten Schlüssel, welcher zur Verschlüsselung von Daten verwendet wird und im Regelfall geheim gehalten werden muss, und einem öffentlichen Schlüssel, welcher an Dritte, beispielsweise an einen Dienstanbieter und/oder einen ZDA, weitergegeben werden darf. Der öffentliche Schlüssel ermöglicht es jedermann, Daten für den Inhaber des privaten Schlüssels zu verschlüsseln, digitale Signaturen von dessen Dokumenten zu prüfen oder ihn zu authentifizieren. Ein privater Schlüssel ermöglicht es seinem Inhaber, mit dem öffentlichen Schlüssel verschlüsselte Daten zu entschlüsseln oder digitale Signaturen für elektronische Dokumente zu erstellen.

Digitale Signaturen werden zur sicheren Abwicklung von Geschäften im Internet eingesetzt und ermöglichen die Prüfung der Identität der Vertragspartner und der Unverfälschtheit der ausgetauschten Daten. Um dies zu gewährleisten, ist in der Regel eine Public-Key-Infrastruktur notwendig, die die Gültigkeit der verwendeten Schlüssel durch Zertifikate bestätigt.

Die Erstellung einer digitalen Signatur, im Folgenden auch lediglich als "Signatur" oder "elektronische Signatur" bezeichnet, ist ein kryptographisches Verfahren, bei dem zu beliebigen Daten, zum Beispiel einem elektronischen Dokument, ein weiterer Datenwert, welcher als "Signatur" bezeichnet wird, berechnet wird. Die Signatur kann zum Beispiel ein verschlüsselter Hashwert des elektronischen Dokumentes sein, insbesondere ein mit einem einem Zertifikat zugeordneten privaten Schlüssel eines kryptographischen Schlüsselpaares verschlüsselter Hashwert. Die Besonderheit einer solchen Signatur besteht darin, dass deren Urheberschaft und Zugehörigkeit zu einer bestimmten Person oder Instanz durch jeden Dritten geprüft werden kann.

Unter einem "geschützten Speicherbereich" wird hier ein Bereich eines elektronischen Speichers verstanden, auf den ein Zugriff, das heißt ein Lesezugriff oder ein Schreibzugriff, von einem mit dem Speicher gekoppelten Prozessor nur dann ermöglicht wird, wenn eine hierzu erforderliche Bedingung erfüllt ist. Hierbei kann es sich zum Beispiel um eine kryptografische Bedingung, insbesondere eine erfolgreiche Authentisierung und/oder eine erfolgreiche Berechtigungsprüfung, handeln.

Unter einer "Kommunikationsschnittstelle" wird hier eine Schnittstelle verstanden, über die Daten empfangen und gesendet werden können, wobei die Kommunikationsschnittstelle kontaktbehaftet oder kontaktlos konfiguriert sein kann, beispielsweise nach einem RFID- und/oder NFC-Standard.

Unter einem "Terminal" wird hier ein elektronisches Gerät verstanden, welches ein Lesegerät umfasst, das einen Lesezugriff und/oder einen Schreibzugriff auf das ID-Token ermöglicht, beispielsweise in Form eines sogenannten Chipkartenterminals. Das Terminal mit dem Lesegerät kann einen integralen Bestandteil eines Nutzer-Computersystems bilden oder als separate Komponente ausgeführt sein, beispielsweise als Peripheriegerät des Nutzer-Computersystems. Insbesondere kann es sich bei dem Lesegerät um ein sogenanntes Klasse 1, 2 oder 3 Chipkartenlesegerät handeln. Das Lesegerät kann mit einer kontaktlosen und/oder kontaktbehafteten Schnittstelle zum Datenaustausch mit einem ID-Token ausgestattet ist.

Ausführungsformen der Erfindung können den Vorteil haben, dass der Zugriff des Terminals auf das Attribut in sicherer Weise seitens des ID-Tokens kontrolliert werden kann. Die Gefahr eines unberechtigten Zugriffs auf das Attribut wird dadurch minimiert.

Zudem können Ausführungsformen den Vorteil aufweisen, das permanente Schlüssel des Terminals, wie etwa ein permanenter privater Schlüssel, zentral auf dem Authentisierungsserver gespeichert und von diesem nach Bedarf zur Verfügung gestellt bzw. genutzt werden können. Diese erleichterter die sichere Verwaltung der entsprechenden permanenten Schlüssel und vereinfacht beispielsweise Updates. Zudem werden auf Grund der zentralen Speicherung die Sicherheitsanforderungen an die einzelnen Terminals gesenkt, weshalb diese weniger komplex und aufwendig konfiguriert werden müssen.

Des Weiteren erfolgt nur bei Bedarf eines entsprechenden permanenten privaten Schlüssels eine Kommunikation zwischen Terminal und Authentisierungsserver. Die Athentisierungsprozesse, welche nur ephemere Schlüssel benötigen, werden direkt zwischen ID-Token und Terminal ausgeführt ohne Einbindung eines Remote-Servers wie etwa des Authentisierungsservers. Hierdurch werden die notwendige Kommunikation und der kryptographisch gesicherte Datenaustausch über ein Netzwerk minimiert und die resultierenden Latenzzeiten reduziert. Andererseits werden für die permanenten Schlüssel alle Vorteile einer zentral Verwalteten realisiert.

Nach einer Ausführungsform wird das erste Zugriffstoken auf eine erfolgreiche Verifizierung der ersten und zweiten Signatur hin als gültiges Zugriffstoken in dem ID-Token gespeichert wird. Ausführungsformen der Erfindung können den Vorteil haben, dass bei einer zukünftigen Terminal-Authentisierung eine aufwendige vollständige Signaturüberprüfung vermieden werden kann. Stattdessen genügt ein Vergleich eines empfangenen Zugriffstokens mit dem als gültig hinterlegten Zugriffstoken, um die Gültigkeit des empfangenen Zugriffstokens zu verifizieren. Dies erlaubt eine schnellere Terminal-Authentisierung bei gleicher Sicherheit.

Nach Ausführungsformen der Erfindung umfasst die Authentisierung durch das ID-Token auf den Empfang des ersten Zugriffstokens hin ein automatisches Überprüfen, ob in dem ID-Token ein mit dem empfangenen ersten Zugriffstoken übereinstimmendes gültiges zweites Zugriffstoken gespeichert ist, wobei im Falle dass ein gültiges zweites Zugriffstoken in dem ID-Token gespeichert ist eine Freigabe eines Zugriffs des Terminals auf das in dem ID-Token gespeicherte Attribut erfolgt, wobei im Falle dass kein gültiges zweites Zugriffstoken in dem ID-Token gespeichert ist die Authentisierung des Terminals durch das ID-Token über den Authentisierungsserver erfolgt.

Ausführungsformen der Erfindung können den Vorteil haben, dass die Geschwindigkeit, mit welcher die Zugriffskontrolle seitens des ID-Tokens erfolgt, trotz der hohen Sicherheit hoch sein kann, da nicht für jeden Zugriffsversuch des Terminals auf das Attribut die oben beschriebene Signaturüberprüfungen durchgeführt werden müssen. Solange ein gültiges übereinstimmendes Zugriffstoken, beispielsweise in Form eines Hash-Werts, in dem ID-Token gespeichert ist, wird eine Signaturüberprüfung vermieden. So entfallen beispielsweise damit verbunden zeit- und energieaufwendige elliptische Kurvenoperationen. Vielmehr wird ein schneller Speicherzugriff auf einen entsprechenden Speicherbereich des ID-Tokens ermöglicht, was nach Überprüfung der Gültigkeit des Zugriffstokens in dem ID-Token ohne weitere Überprüfung beispielsweise eines permanenten Zertifikats des Terminals den Zugriff auf die in dem ID-Token gespeicherten Attribute erlaubt.

Nach Ausführungsformen der Erfindung umfasst das Zugriffstoken eine Zugriffsberechtigung, wobei das Verfahren ferner umfasst:

- im Falle dass kein gültiges zweites Zugriffstoken in dem ID-Token gespeichert ist, nach dem erfolgreichen Verifizieren der ersten und zweiten Signatur Verknüpfen und Speichern der Zugriffsberechtigung mit dem ersten Zugriffstoken in dem ID-Token, wobei eine Freigabe des Zugriffs des Terminals auf das Attribut entsprechend der Zugriffsberechtigung erfolgt,
- im Falle dass ein gültiges zweites Zugriffstoken in dem ID-Token gespeichert ist, Lesen der mit dem zweiten Zugriffstoken verknüpft gespeicherten Zugriffsberechtigung, wobei eine Freigabe des Zugriffs des Terminals auf das Attribut entsprechend der Zugriffsberechtigung erfolgt.

Dies kann den Vorteil haben, dass das durch das Zugriffstoken im Voraus festgelegt werden kann, wie und auf welche Attribute das Terminal Zugriff erhalten soll. Beispielsweise kann dies über ein Terminal-Zertifikat festgelegt werden, aus welchem das Zugriffstoken in Form eines Hash-Werts abgeleitet wird. Die Zugriffsberechtigung wird nach Ausführungsformen von Metadaten des Zertifikats umfasst, deren Hash von dem Hash-Wert mit umfasst wird. Beispielsweise können spezifische Attribute angegeben werden, sodass insgesamt nicht ein Vollzugriff auf sämtliche im ID-Token gespeicherten Attribute erfolgt, sondern nur auf eine beschränkte Auswahl hiervon. Ferner kann die Zugriffsberechtigung eine Angabe dahingehend enthalten sein, ob nur ein Lesezugriff oder ein Lese- und Schreibzugriff gegeben ist.

In einem beispielhaften Anwendungsszenario kann das besagte Terminal in einem Sicherheitssystem zum Einsatz kommt, bei welchem das Terminal mit einer zugriffsbeschränkten Sicherungseinrichtung gekoppelt ist. Die Sicherungseinrichtung kann beispielsweise den Zugang zu einem Raum, Gebäude oder einem Computersystem sichern.

Bei erstmaliger Benutzung des ID-Tokens zum Zugang über die Sicherungseinrichtung kann das Terminal eine entsprechende Zugangsberechtigung als Attribut in dem ID-Token speichern. Für diesen erstmaligen Speicherzugriff benötigt das Terminal eine entsprechende Zugriffsberechtigung. Ferner ist es denkbar, dass das Terminal in nachfolgenden Kommunikationsvorgängen mit dem ID-Token zudem die Berechtigung behalten muss, die Zugangsmöglichkeit über die Sicherungseinrichtung beispielsweise durch Entzug der Zugangsberechtigung zu unterbinden oder einzuschränken.

Nach einer Ausführungsform umfasst das Verfahren ferner,

- im Falle dass kein gültiges zweites Zugriffstoken in dem ID-Token gespeichert ist, nach dem erfolgreichen Verifizieren der ersten und zweiten Signatur Verknüpfen und Speichern des statischen öffentlichen Schlüssels des Terminals mit dem ersten Zugriffstoken in dem ID-Token, wobei eine weitere Kommunikation mit dem Terminal verschlüsselt unter Verwendung des statischen öffentlichen Schlüssels des Terminals erfolgt,
- im Falle dass ein gültiges zweites Zugriffstoken in dem ID-Token gespeichert ist, Lesen des mit dem Zugriffstoken verknüpft gespeicherten statischen öffentlichen Schlüssels des Terminals, wobei eine weitere Kommunikation mit dem Terminal verschlüsselt unter Verwendung des statischen öffentlichen Schlüssels des Terminals erfolgt.

Beispielsweise ist der statische öffentliche Schlüssel des Terminals dem permanenten Zertifikat des Terminals zugeordnet, dessen Hash-Wert den Zugangstoken bildet. Der statische öffentliche Schlüssel wird verknüpft mit dem Hash-Wert in dem ID-Token gespeichert und eine weitere Kommunikation mit dem Terminal erfolgt verschlüsselt unter Verwendung des statischen öffentlichen Schlüssels des Terminals. Zum Beispiel ist der statische öffentliche Schlüssel in dem permanenten Zertifikat enthalten, wobei der Hash-Wert einen Hash des statischen öffentlichen Schlüssels umfasst.

Dies kann den Vorteil haben, dass die Geschwindigkeit der Authentisierung des Terminals durch das ID-Token weiter erhöht wird. Im Falle dass ein gültiger Zugangstoken, z.B. Hash-Wert, in dem ID-Token gespeichert ist, entfällt ein erneuter Austausch in Form einer Datenübertragung des statischen öffentlichen Schlüssels des Terminals. Der gespeicherte statische öffentliche Schlüssel des Terminals kann direkt aus dem Speicher des ID-Tokens gelesen und für die weitere Kommunikation mit dem Terminal verwendet werden.

Nach einer Ausführungsform ist der permanente öffentliche Schlüssel des Terminals in dem Zugriffstoken enthalten.

Beispielsweise ist der statische öffentliche Schlüssel des Terminals in einem permanenten Zertifikat enthalten, das das Terminal dem ID-Token als Zugriffstoken oder zur Erzeugung des Zugriffstokens übersendet. Dadurch wird der statische öffentliche Schlüssel im Rahmen das Terminal Authentisierung automatisch empfangen und kann in Verbindung mit dem aus dem Zertifikat abgeleiteten Hash-Wert weitere Verwendung finden, ohne dass hierzu ein separater Datenaustauschschritt bezüglich notwendig wäre. Da ein solcher Hash-Wert den Hash des statischen öffentlichen Schlüssels umfasst, ist außerdem sichergestellt, dass der Hash-Wert, d.h. das Zugriffstoken, in eindeutiger Weise dem besagten Terminal zugeordnet werden kann. Zugleich wird unter der Voraussetzung der Einmaligkeit des statischen öffentlichen Schlüssels sichergestellt, dass auch das Zugriffstoken in Form des Hash-Werts, der den Hash des statischen öffentlichen Schlüssels umfasst, ebenfalls einmalig ist und somit eine eindeutige Identifikation und Authentifizierung des Terminals erlaubt.

Nach einer Ausführungsform umfasst das Verfahren ferner,

- im Falle dass kein gültiges zweites Zugriffstoken in dem ID-Token gespeichert ist, nach dem erfolgreichen Verifizieren der ersten und zweiten Signatur Erzeugen und Verknüpfen eines Zeitstempels mit dem Zugriffstoken in dem ID-Token, wobei der Zeitstempel eine maximale Gültigkeitsdauer des Zugriffstokens angibt,
- im Falle dass ein zweites Zugriffstoken in dem ID-Token gespeichert ist, Lesen des mit dem zweiten Zugriffstoken verknüpft gespeicherten Zeitstempels, wobei das zweite Zugriffstoken nur dann gültig ist, wenn der Zeitstempel gültig ist.

Nach einer Ausführungsform wird der Zeitstempel für das Speichern des Zugriffstokens in dem ID-Token auf Basis einer vordefinierten relativen Gültigkeitsdauer erzeugt.

Die besagte relative Gültigkeitsdauer kann beispielsweise eine Zeitdauer wie ein Jahr, sechs Monate, 24 Stunden umfassen. Beispielsweise wird mit dem Speichern des Zugriffstokens eine Systemzeit des Terminals oder des ID-Tokens herangezogen und die relative Gültigkeitsdauer der Systemzeit hinzuaddiert. Hieraus ergibt sich die maximale Gültigkeitsdauer in Form eines absoluten Zeitwertes, z.B. eines Ablaufdatums oder einem Ablaufzeitpunkt. Umfasst das Zugriffstoken Metadaten in Form eines Zeitstempels, kann damit die Gültigkeitsdauer des Zugriffs des Terminals auf das Attribut des ID-Tokens ausgehend von einem initialen Zeitpunkt für eine bestimmte Zeitdauer ohne weitere Authentisierung durchgeführt werden. Eine vollständige Authentisierung erfolgt in diesem Fall nicht ständig, sondern nur zu vordefinierten Zeitpunkten, welche durch die relative Gültigkeitsdauer vorgegeben werden. Dabei legt das Terminal, welches die Metadaten bereitstellt selbst fest, in welchen zeitlichen Abständen eine vollständige Authentisierung des Terminals durch das ID-Token zu erfolgen hat.

Die maximale Gültigkeitsdauer kann jedoch auch durch eine maximale Anzahl von Zugriffen des Terminals auf das ID-Token gegeben sein. Nach einer Ausführungsform umfasst das Verfahren ferner,

- im Falle dass kein gültiges zweites Zugriffstoken in dem ID-Token gespeichert ist, nach dem erfolgreichen Verifizieren der ersten und zweiten Signatur Erzeugen und Verknüpfen eines Nutzungszählers mit dem Zugriffstoken in dem ID-Token, wobei der Nutzungszähler dazu konfiguriert ist die Anzahl der Nutzungen des Zugriffstokens zur Freigabe des Zugriffs des Terminals auf das Attribut zu zählen,
- im Falle dass ein zweites Zugriffstoken in dem ID-Token gespeichert ist, Lesen des mit dem zweiten Zugriffstoken verknüpft Nutzungszähler, wobei das zweite Zugriffstoken nur dann gültig ist, wenn der Nutzungszähler einen vordefinierten Grenzwert nicht erreicht hat.

Ausführungsformen können den Vorteil haben, dass die maximale Anzahl beschleunigter Terminal-Authentisierungen unter Verwendung eines einmal auf dem ID-Token hinterlegten gültigen zweiten Zugriffstoken beschränkt wird. Ist die maximale Anzahl an Nutzungen des zweiten Zugriffstoken erreicht, ist eine erneute vollständige Authentisierung notwendig.

Nach einer Ausführungsform wird der Nutzungszähler entweder mit einer vordefinierten maximalen Nutzungszahl erzeugt und von dieser bis Null als vordefiniertem Grenzwert herunterzählt oder mit Null erzeugt und bis zu einer vordefinierten maximalen Nutzungszahl als vordefiniertem Grenzwert hinauf zählt.

Ein konkretes Anwendungsbeispiel kann das oben beschriebene Sicherheitssystem darstellen, bei welchem ein Zugangsmanagementserver die finale Überprüfung des ausgelesenen Attributs und die Freigabe eines Zugriffs auf die Sicherungseinrichtung durchführt. Das Terminal arbeitet dabei als Schnittstelle zwischen ID-Token und Zugangsmanagementserver und sorgt dafür, dass das ID-Token sicher sein kann, dass es mit einer vertrauenswürdigen Instanz in Form des Terminals kommuniziert. Das Terminal kann nach Ausführungsformen ein Lesegerät bzw. Lesemodul zum Kommunizieren mit dem ID-Token sowie ein Steuermodul zum Steuern der Kommunikation und des Datenaustauschs umfassen. Das Lesemodul kann beispielsweise eine Antenne zur kontaktlosen Kommunikation mit dem ID-Token umfassen. Beispielsweise kann es sich bei dem Lesemodul um ein RIFD-Lesemodul handeln. Dabei kann beispielsweise die Kommunikation zwischen dem Lesemodul und dem ID-Token entsprechend der Norm ISO 14443 drahtlos mit einer Frequenz von 13,56 MHz erfolgen. Die Kommunikation zwischen Terminal und Zugangsmanagementserver kann über ein Netzwerk wie etwa ein Intranet oder das Internet erfolgen. Sobald der Zugangsmanagementserver erstmalig die Freigabe des Zugriffs auf die Sicherungseinrichtung erteilt hat, kann über das Terminal ein entsprechendes Attribut im ID-Token gespeichert werden, welches für einen bestimmten Zeitraum den weiteren Zugriff auf die Sicherungseinrichtung ohne weitergehende und zusätzliche aufwendige Authentisierung ermöglicht.

Nach einer Ausführungsform wird das Zugriffstoken in einer ersten Nachricht von dem Terminal an das ID-Token gesendet, wobei die erste Nachricht ein Wurzelzertifikat umfasst, wobei im Falle dass kein gültiges zweites Zugriffstoken in dem ID-Token gespeichert ist die Authentisierung durch das ID-Token ferner ein Verifizieren des Zugriffstokens über das Wurzelzertifikat mittels eines in dem ID-Token gespeicherten öffentlichen Schlüssels einer Wurzelzertifizierungsstelle umfasst, wobei erst nach erfolgreicher Verifizierung des Zugriffstokens über das Wurzelzertifikat das Speichern des Zugriffstokens und das Freigeben des Zugriffs des Terminals auf das Attribut erfolgt.

Beispielsweise wird das permanente Zertifikat des Terminals über das Wurzelzertifikat mittels eines in dem ID-Token gespeicherten öffentlichen Schlüssels einer Wurzelzertifizierungsstelle verifiziert, wobei erst nach erfolgreicher Verifizierung des permanenten Zertifikats des Terminals über das Wurzelzertifikat das Speichern des Hash-Wertes als Zugriffstoken in dem ID-Token und die Freigabe des Zugriffs des Terminals auf das Attribut erfolgt.

Dies kann den Vorteil haben, dass durch eine zentrale vertrauenswürdige Instanz, d.h. eine Wurzelzertifizierungsstelle, festgelegt werden kann, in welcher Weise der Zugriff auf das Attribut erfolgen kann. Ein Wurzelzertifikat, auch als Stammzertifikat bezeichnet, ist ein unsigniertes Public-Key-Zertifikat oder selbstsigniertes Zertifikat einer Wurzelzertifizierungsstelle, das dazu dient, die Gültigkeit aller untergeordneten Zertifikate zu validieren. Wurzelzertifikate sind ein wichtiger Bestandteil eines Public-Key-Infrastruktursystems (PKI-Systems) und implizit vertrauenswürdig. Ein Wurzelzertifikat basiert beispielsweise auf dem ISO X.509-Standard. Mit einer PKI-Infrastruktur bzw. PKI-System wird ein System bezeichnet, welches digitale Zertifikate ausstellen, verteilen und prüfen kann. Die innerhalb einer PKI ausgestellten Zertifikate werden zur Absicherung rechnergestützter Kommunikation verwendet. Da üblicherweise der Wurzelzertifizierungsstelle sowohl von dem ID-Token als auch dem Terminal vertraut wird, kann das ID-Token davon ausgehen, dass sämtliche in den Metadaten enthaltenen Informationen als vertrauenswürdig anzusehen sind. Befinden sich in bzw. auf dem ID-Token beispielsweise sensible persönliche Informationen wie ein Geburtsdatum, biometrische Informationen, eine Wohnadresse und dergleichen, muss ein Benutzer des ID-Tokens keine Sorge haben, dass das Terminal unbefugt in Besitz dieser Attributen gelangt. Durch die Absicherung über eine zentrale Wurzelzertifizierungsstelle ist insofern sichergestellt, dass ein Missbrauch des ID-Tokens durch das Terminal effektiv unterbunden werden kann.

Nach einer Ausführungsform wird die erste Nachricht ohne eine vorherige von dem Terminal empfangene Ankündigung oder Referenz der Zertifizierungsstelle des permanenten Zertifikats empfangen. Eine Auswahl der Wurzelzertifizierungsstelle des Terminals entfällt also und stattdessen arbeitet das ID-Token grundsätzlich mit einer einzigen Wurzelzertifizierungsstelle. Dem Terminal ist das bekannt, sodass die Auswahl eines für eine spezifische Zertifizierungsstelle zugeschnittenen Zertifikats des Terminals auf Seiten des ID-Tokens entfällt. Damit entfällt auch ein zusätzlicher Datenübertragungsschritt vom ID-Token zum Terminal zur Anforderung der zugehörigen Referenz der Zertifizierungsstelle des permanenten Zertifikats.

Nach einer Ausführungsform wird das erste Geheimnis automatisch in Erwiderung auf den Empfang des sitzungsgebundenen temporären öffentlichen Schlüssels des Terminals erzeugt und an das Terminal gesendet. Es wird somit keine explizite Anforderung des Terminals abwartend. Anstatt also seitens des Terminals mit einem zusätzlichen Kommando "Get Challenge" explizit das erste Geheimnis anzufordern, wird seitens des ID-Tokens das erste Geheimnis nach Empfang des sitzungsgebundenen temporären öffentlichen Schlüssels automatisch an das Terminal gesendet. Auch dies spart einen weiteren Kommunikationsschritt zwischen ID-Token und Terminal, wodurch die Kommunikation beschleunigt wird.

Nach einer Ausführungsform ist das Zugriffstoken ein aus einem permanenten Zertifikat des Terminals abgeleiteter Hash-Wert. Nach einer Ausführungsform umfasst der Hash-Wert einen Hash von Metadaten des permanenten Zertifikats.

Nach einer Ausführungsform umfasst die Authentisierung des ID-Token:

- Senden eines öffentlichen Schlüssels des ID-Tokens und eines zu dem öffentlichen Schlüssel zugehörigen Domain-Parameter an das Terminal,
- Berechnen eines dem ID-Token und dem Terminal gemeinsamen zweiten Geheimnisses aus dem privaten Schlüssel des ID-Tokens, dem sitzungsgebundenen temporären öffentlichen Schlüssels des Terminals und dem Domain-Parameter durch das ID-Token,
- Berechnen des gemeinsamen zweiten Geheimnisses aus dem öffentlichen Schlüssel des ID-Tokens, dem sitzungsgebundenen temporären privaten Schlüssels des Terminals und dem Domain-Parameter durch das Terminal,
- Erzeugen eines zufälligen dritten Geheimnisses durch das ID-Token,
- Senden des zufälligen dritten Geheimnisses an das Terminal und
- Erzeugen eines symmetrischen Sitzungsschlüssels aus dem dritten Geheimnis und dem gemeinsamen zweiten Geheimnis durch das ID-Token und das Terminal,
  wobei die nachfolgende Kommunikation mit dem Zugriff auf das Attribut verschlüsselt mit dem symmetrischen Sitzungsschlüssel erfolgt und wobei ein Zugriff des Terminals auf das Attribut nur unter der Voraussetzung einer erfolgreichen Authentisierung des ID-Tokens gegenüber dem Terminal erfolgt.

Ausführungsformen können den Vorteil haben, dass durch die Authentisierung des ID-Tokens bzw. die Chip-Authentisierung ein sicherer Kommunikationskanal mit einer Ende-zu-Ende-Verschlüsselung zwischen dem ID-Token und dem Terminal aufgebaut wird.

Nach einer Ausführungsform wird entweder der öffentliche Schlüssel des ID-Tokens automatisch gesendet oder das ID-Token verfügt über mehrere verschiedene öffentliche Schlüssel, wobei einer dieser verschiedenen öffentlichen Schlüssel als Standardschlüssel definiert ist und durch das ID-Token in Erwiderung auf einen Empfang einer allgemeinen Anforderung eines öffentlichen Schlüssels seitens des Terminals der Standardschlüssel als der öffentliche Schlüssel des ID-Tokens an das Terminal gesendet wird.

Nach dem obig beschrieben "Terminal-Authentisierung" erfolgt der Prozess der "Chip-Authentisierung", wobei jedoch auch hier zur Einsparung von Kommunikationsschritten der öffentliche Schlüssel des ID-Tokens automatisch und ohne eine vorherige explizite Anforderung seitens des Terminals gesendet wird. Das ID-Token wird automatisch seinen einzelnen öffentlichen Schlüssel an das Terminal senden oder im Falle des Verfügens über mehrere verschiedene öffentliche Schlüssel einen seitens des ID-Tokens als "Standard" definierten öffentlichen Schlüssel an das Terminal senden. Das Terminal übermittelt also nicht mehr explizit die Referenz des Schlüssels, für den das ID-Token die Kenntnis seines privaten Schlüssels beweisen soll.

Der eigentliche Beweis des Besitzes des zum öffentlichen Schlüssel des ID-Tokens zugehörigen privaten Schlüssels erfolgt durch die besagten Schritte des Berechnens des gemeinsamen zweiten Geheimnisses, des zufälligen dritten Geheimnisses und des symmetrischen Sitzungsschlüssels. Nur unter der Voraussetzung, dass das ID-Token in der Lage ist, einen symmetrischen Sitzungsschlüssel zu berechnen, welcher mit einem in entsprechender Weise auf Seiten des Terminals berechneten symmetrischen Sitzungsschlüssel übereinstimmt, wird ein Kommunikationskanal zwischen Terminal und ID-Token aufgebaut. Die Kommunikation über diesen Kommunikationskanal wird mit dem symmetrischen Sitzungsschlüssel verschlüsselt und erlaubt somit einen kryptographisch gesicherten Zugriff des Terminals auf das Attribut des ID-Token.

Nach einer Ausführungsform umfasst das Verfahren ferner:

- Senden eines Zertifikats des ID-Tokens an das Terminal,
- Verifizieren des Zertifikats, wobei die Authentisierung des ID-Tokens gegenüber dem Terminal unter der Voraussetzung eines positiven Verifizierens des Zertifikats erfolgt.

Diese Verifikation des Zertifikates des ID-Tokens wird auch als passive Authentisierung bezeichnet. Dadurch wird die Authentizität des ID-Tokens nachgewiesen. Zudem ermöglicht eine solche Authentisierung die Gültigkeit des ID-Tokens zu überprüfen, etwa indem geprüft wird, ob das ID-Token gesperrt ist.

Nach einer Ausführungsform umfasst das Verifizieren des Zertifikats des ID-Tokens ferner:

- Auslesen einer Sperr-ID aus dem Zertifikat des ID-Tokens durch das Terminal,
- Senden einer Speeranfrage von dem Terminal an den Authentisierungsserver,
- Senden einer Sperrinformation von dem Authentisierungsserver an das Terminal, wobei ein Zugriff des Terminals auf das Attribut nur unter der Voraussetzung erfolgt, dass die Sperrinformation anzeigt, dass das ID-Token nicht gesperrt ist.

Ausführungsformen können den Vorteil haben, dass sie eine Sperrung des ID-Tokens sowie eine effiziente Prüfung des ID-Tokens auf eine Sperrung ermöglichen. Ergibt die Prüfung, dass das ID-Token gesperrt ist, so wird das Verfahren abgebrochen und es erfolgt kein Auslesen des Attributs durch das Terminal. Somit wird dem ID-Token aber auch kein Zugang zu bzw. über eine Sicherungseinrichtung zu einem durch diese gesicherten Bereich gewährt.

Ein Sperren eines für einen ID-Token erstellten Zertifikats ist beispielsweise notwendig, falls der dem Zertifikat zugeordnete ID-Token abhanden gekommen ist, gestohlen wurde oder dessen Einsatz aus sonstigen Gründen allgemein oder für bestimmte Anwendungen verhindert werden soll, um sicherzustellen dass kein Missbrauch betrieben wird.

Nach einer Ausführungsform umfasst die Speeranfrage die Sperr-ID, der Authentisierungsserver die Sperr-ID mit einer Sperrliste abgleicht und das Ergebnis des Abgleichs als Sperrinformation an das Terminal sendet. Bei der Sperrliste handelt es sich beispielsweise um eine Negativ- oder eine Positivliste. Dadurch dass lediglich eine Sperr-ID und eine Sperrinformation, welche beispielweise mitteilt dass das entsprechende Zertifikat gesperrt oder nicht gesperrt ist, wird das Datenübertragungsvolumen klein gehalten und die Kommunikationsgeschwindigkeit erhöht.

Nach einer Ausführungsform sendet der Authentisierungsserver als Sperrinformation eine Sperrliste an das Terminal, welches die Sperr-ID mit der empfangenen Sperrliste abgleicht. Nach Ausführungsformen sendet der Terminal zudem eine Versions-ID einer auf dem Terminal gespeicherten Sperrliste an den Authentisierungsserver. Stimmt die Versions-ID der Sperrliste auf dem Authentisierungsserver mit der vom Terminal empfangenen Versions-ID überein, so ist die Sperrliste des Terminals auf dem neuesten Stand und eine erneuet Übersendung kann eingesperrt werden. Stimmen die Versions-IDs nicht überein, bedeutet dies, dass die Sperrliste des Terminals veraltet ist. Diese veraltete Sperrliste wird daraufhin durch die mit der Sperrinformation übersendete Sperrliste ersetzt. Dadurch kann das Datenübertragungsvolumen klein gehalten und die Kommunikationsgeschwindigkeit erhöht werden.

Ausführungsformen betreffen zudem ein System, welches umfasst:

- einen ID-Token mit einer ersten Kommunikationsschnittstelle, einem ersten Prozessor und einem ersten computerlesbaren Speichermedium, wobei das erste Speichermedium computerlesbare erste Instruktionen enthält, welche bei Ausführung durch den ersten Prozessor die Durchführung eines Verfahrens nach einem der vorhergehenden Ansprüche bewirken,
- einen Terminal mit einer zweiten Kommunikationsschnittstelle, einem zweiten Prozessor und einem zweiten computerlesbaren Speichermedium, wobei das zweite Speichermedium computerlesbare zweite Instruktionen enthält, welche bei Ausführung durch den zweiten Prozessor die Durchführung des Verfahrens nach einem der vorhergehenden Ansprüche bewirken,
- einen Authentisierungsserver mit einer dritten Kommunikationsschnittstelle, einem dritten Prozessor und einem dritten computerlesbaren Speichermedium, wobei das dritte Speichermedium computerlesbare dritte Instruktionen enthält, welche bei Ausführung durch den dritten Prozessor die Durchführung des Verfahrens nach einem der vorhergehenden Ansprüche bewirken.

Ausführungsformen betreffen zudem ein Verfahren zur Freigabe eines Zugriffs auf eine zugriffsbeschränkte Sicherungseinrichtung mittels eines ID-Tokens, eines Terminals und eines Authentisierungsservers, wobei das Verfahren umfasst:

- Durchführen des Verfahrens nach einem der vorhergehenden Ansprüche 1 bis 20 durch das ID-Token, das Terminal und den Authentisierungsservers,
- nach Freigabe des Zugriffs des Terminals auf das Attribut, Lesen des Attributs durch das Terminal und versenden einer Zugriffsanfrage an einen Zugangsmanagementserver, wobei die Zugriffsanfrage das Attribut verschlüsselt umfasst,

- Entschlüsseln und Verifizieren des Attributs durch den Zugangsmanagementserver, wobei der Zugangsmanagementserver im Falle eines erfolgreichen Verifizierens den Zugang zu der Sicherungseinrichtung freigibt.

Ausführungsformen betreffen zudem ein Sicherheitssystem umfassend das zuvor definierte System, sowie eine zugriffsbeschränkte Sicherungseinrichtung und einen Zugangsmanagementserver,

- wobei das Terminal dazu konfiguriert ist, nach Freigabe des Zugriffs des Terminals auf das Attribut das Attribut zu lesen und eine Zugriffsanfrage an den Zugangsmanagementserver zu versenden, wobei die Zugriffsanfrage das Attribut verschlüsselt umfasst,
- wobei der Zugangsmanagementserver dazu konfiguriert ist, eine Entschlüsselung und Überprüfung des Attributs durchzuführen und im Fall einer erfolgreichen Überprüfung den Zugang zu der Sicherungseinrichtung freizugeben.

Nach einer Ausführungsform umfasst die Sicherungseinrichtung ferner eine Zugangskontrolleinrichtung mit einer Verriegelungsanlage und die Sicherungseinrichtung ist dazu konfiguriert auf eine Freigabe des Zugangs zu der Sicherungseinrichtung hin die Verriegelungsanlage der Zugangskontrolleinrichtung zu entriegeln.

Im Weiteren werden Ausführungsformen der Erfindung mit Bezugnahme auf die Zeichnungen näher erläutert. Es zeigen:

Figur 1    ein schematisches Blockdiagramm eines beispielhaften Sicherheitssystems gemäß der vorliegenden Erfindung,

Figur 2    ein Flussdiagramm eines Verfahrens zur Freigabe des Zugriffs auf eine zugriffsbeschränkte Sicherungseinrichtung mittels eines ID-Tokens,

Figur 3    ein Flussdiagramm eines Verfahrens zur Kontrolle des Zugriffs eines Terminals auf ein in einem ID-Token gespeichertes Attribut,

Figur 4    ein UML-Diagramm des erfindungsgemäßen Verfahrens aus Figur 3.

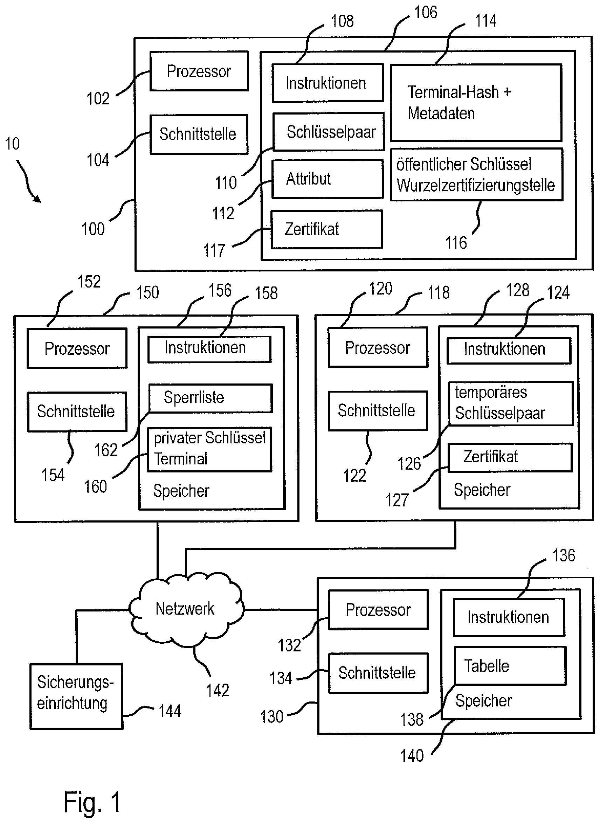

Die Figur 1 zeigt ein Blockdiagramm eines Sicherheitssystems 10 umfassend einen ID-Token 100, ein Terminal 118, einen Authentisierungsserver 150, einen Zugangsmanagementserver 130 sowie eine Sicherungseinrichtung 144. Das ID-Token 100 kann mit dem Terminal 118 über eine kontaktbehaftete oder eine kontaktlose Schnittstelle 104 auf Seiten des ID-Tokens 100 und einer komplementären Schnittstelle 122 seitens des Terminals 118 kommunizieren. Hierbei kann es sich insbesondere um eine Nahfeldkommunikation, beispielsweise mittels RFID, Bluetooth oder WLAN handeln. Beispielsweise erfolgt die Kommunikation zwischen dem Terminal 118 und dem ID-Token 100 entsprechend der Norm ISO 14443 drahtlos mit einer Frequenz von 13,56 MHz.

Die Schnittstelle 122 des Terminals 118, die Schnittstelle 134 des Zugangsmanagementservers 130 und eine nicht weiter gezeigte Schnittstelle der Sicherungseinrichtung 144 können über ein Netzwerk 142 zur Kommunikation und Datenübertragung untereinander verwendet werden. Bei dem Netzwerk 142 kann es sich beispielsweise um das Internet oder ein Intranet handeln.

Die Sicherungseinrichtung 144 dient zur Sicherung des Zugriffs auf oder des Zutritts zu einem sensitiven Bereich. Beispielsweise kann es sich bei diesem Bereich um einen räumlichen Bereich handeln und bei der Sicherungseinrichtung 144 um eine Zugangskontrolleinrichtung mit einer Verriegelungsanlage, beispielweise eine Türe oder Schranke mit einem entsprechenden elektronischen Schloss. So kann beispielsweise eine Freigabe eines Öffnens der Türe zu dem räumlichen Bereich durch die Sicherungseinrichtung 144 gesteuert werden. In einem anderen Beispiel dient die Sicherungseinrichtung 144 zum Schutz von Daten, welche in einer Datenbank gespeichert sind. In diesem Fall kontrolliert die Sicherungseinrichtung 144 den Zugriff auf die in der Datenbank gespeicherten Daten.

Das ID-Token 100 dient als "Schlüssel", um Zugriff auf die Sicherungseinrichtung 144 und Zutritt zu dem von der Sicherungseinrichtung 144 gesicherten Bereich zu erlangen. Hierzu verfügt ein Speicher 106 des ID-Tokens 100 über ein Attribut 112, welches, wie nachfolgend erläutert wird, an den Zugangsmanagementserver 130 übertragen wird. Das Attribut 112 ist beispielsweise in einem geschützten Speicherbereich des Speichers 106 gespeichert. Ein "geschützter Speicherbereich" kann z.B. ein Datenspeicher eines Datenverarbeitungsgeräts sein, auf welchen nur ein auf diesem Datenverarbeitungsgerät integrierter Prozessor Zugriff hat. Alternativ oder zusätzlich dazu kann der Speicher durch weitere Sicherheitsmaßnahmen vor unberechtigtem Zugriff auf die darin gespeicherten Daten geschützt sein, etwa durch kryptographische Sicherheitsvorkehrungen oder Mechanismen, die eine mechanische Zerstörung des Speichers im Falle eines unberechtigten Zugriffsversuchs bewirken. Das Attribut 112 wird vom Zugangsmanagementserver 130 dazu verwendet, über die Freigabe des Zugriffs auf Sicherungseinrichtung 144 für den Nutzer des ID-Tokens 100 zu entscheiden. Das nachfolgend beschriebene Verfahren stellt dabei sichert, dass zwischen dem ID-Token 100 und dem Terminal 118 ein inertiales Vertrauensverhältnis hergestellt wird, welches einen sicheren gegenseitigen Datenaustausch zur Abfrage und Übermittlung des Attributs 112 ermöglicht.

In dem Speicher 106 sind zudem Instruktionen 108 gespeichert, welche bei Ausführung durch den Prozessor 102 das ID-Token veranlassen ein erfindungsgemäßes Verfahren auszuführen. Zudem ist ein Zugriffstoken in Form eines Hash-Werts 114 mit Metadaten gespeichert, ein öffentlicher Schlüssel 116 einer Wurzelzertifizierungsstelle sowie ein asymmetrisches Schlüsselpaar 110 des ID-Tokens, welches einen öffentlichen und einen privaten Schlüssel umfasst. Zumindest der private Schlüssel ist vorteilhafter Weise ebenfalls in einem geschützten Bereich des Speichers 106 gespeichert. Des Weiteren ist ein dem ID-Token 100 zugeordnetes Zertifikat 117 in dem Speicher 106 gespeichert.

Das Terminal 118 umfasst neben der Schnittstelle 122 und dem Prozessor 120 einen Speicher 128, in welchem Instruktionen 124 gespeichert sind. Durch Ausführung der Instruktionen 124 durch den Prozessor 120 wird das Terminal 118 dazu veranlasst ein erfindungsgemäßes Verfahren auszuführen. Zudem umfasst der Speicher 128 ein durch das Terminal 118 erzeugtes temporäres asymmetrisches Schlüsselpaar 126, welches einen temporären öffentlichen und einen temporären privaten Schlüssel umfasst, sowie die Zertifikate 127 des Terminals 118.

Der Authentisierungsserver 150 umfasst neben der Schnittstelle 154 einen Speicher 156, in welchem Instruktionen 158 gespeichert sind. Durch Ausführung der Instruktionen 158 durch den Prozessor 152 wird der Authentisierungsserver 150 dazu veranlasst ein erfindungsgemäßes Verfahren auszuführen. Zudem umfasst der Speicher 156 eine Speerliste 162 und zumindest einen privaten kryptographischen Schlüssel 160, welcher dem Terminal 118 zugeordnet ist. Die Speerliste 162 kann also Negativliste oder als Positivliste ausgestaltet sein. Der private Schlüssel 160 ist nach Ausführungsformen in einem geschützten Speicherbereich des Speichers 156 gespeichert.

Der Zugangsmanagementserver 130 umfasst neben der Schnittstelle 134 und dem Prozessor 132 einen Speicher 140, in welchem Instruktionen 136 gespeichert sind. Durch Ausführung der Instruktionen 136 durch den Prozessor 132 wird der Zugangsmanagementserver 130 dazu veranlasst ein erfindungsgemäßes Verfahren auszuführen. Zudem umfasst der Speicher 140 eine Tabelle 138, in der gültige Attribute zum Abgleich mit dem durch das Terminal 118 aus dem ID-Token 100 ausgelesenen Attribut 112. Die Tabelle 138 ist nach Ausführungsformen in einem geschützten Speicherbereich des Speichers 140 gespeichert.

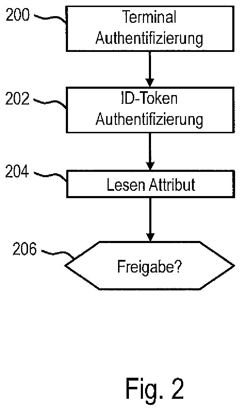

Die Figur 2 zeigt ein Flussdiagramm eines mehrstufigen Verfahrens zur Freigabe des Zugriffs auf eine zugriffsbeschränkte Sicherungseinrichtung 144 mittels eines ID-Tokens 100.

In Schritt 200 erfolgt eine sogenannte Terminal-Authentisierung, wobei das Terminal 118 ein Zugriffstoken an das ID-Token 100, beispielsweise eine Chipkarte, überträgt und das ID-Token 118 das übertragene Zugriffstoken validiert. Ein solches Zugriffstoken kann beispielsweise ein Hash-Wert eines permanenten Zertifikats des Terminals 118 sein. In diesem Fall überträgt das Terminal 118 des Zugriffstokens beispielsweise in Form des entsprechenden permanenten Zertifikats, aus welchem das ID-Token 100 den entsprechenden Hash-Wert ableitet. Im Zuge der Validierung prüft das ID-Token 100, ob das Zugriffstoken, z.B. der aus dem permanenten Zertifikat abgeleitete Hash-Wert, bereits in dem ID-Token 100 als gültig gespeichert ist. Die Validierung ist erfolgreich, falls ein mit dem aus dem empfangenen Zertifikat abgeleiteter Hash-Wert mit einem gültigen, in dem ID-Token 100 gespeicherten Hash-Wert übereinstimmt. Umfasst die Validierung eine Verifizierung mittels eines im ID-Token 100 installierten Wurzelzertifikats, muss das Terminal 118 das oder die Zertifikate übertragen, welche eine solche Verifizierung mittels des im ID-Token 100 installierten Wurzelzertifikats ermögliche. Eine erfolgreiche Validierung des Zertifikats bedeutet für das ID-Token 100, dass das Terminal 118 für einen weiteren Datenaustausch vertrauenswürdig ist. Dies ist daher die Grundvoraussetzung für die Durchführung der weiteren Schritte 202 bis 206.

Die ID-Token-Authentisierung in Schritt 202, auch Chip-Authentisierung genannt, dient dem Nachweis, dass das ID-Token 100 den privaten Schlüssel zu seinem dem Terminal 118 zur Verfügung gestellten öffentlichen Schlüssel kennt. Falls dieser öffentliche Schlüssel in dem ID-Token 100 durch den Ausweisaussteller signiert vorliegt, bedeutet der erfolgreiche Abschluss des Protokolls zwischen Terminal 118 und ID-Token 100, dass das ID-Token 100 echt und nicht gefälscht ist.

Erst wenn die Schritte 200 und 202 erfolgreich abgeschlossen sind, kann das Terminal 118 in Schritt 204 das Attribut 112 aus dem Speicher 106 des ID-Tokens 100 auslesen und mittels einer verschlüsselten Kommunikation, beispielsweise mittels einer Ende-zu-Ende-Verschlüsselung, dem Zugangsmanagementserver 130 über das Netzwerk 142 zur Verfügung stellen. Der Zugangsmanagementserver 130 verfügt über einen Prozessor 132 und einen Speicher 140, wobei der Speicher 140 Programminstruktionen 136 aufweist. Die Programminstruktionen 136 dienen zum einen der verschlüsselten Kommunikation mit dem Terminal 118 über die Schnittstelle 134 und sie dienen zum anderen dazu, das Attribut 112 nach Empfang mit Attributen abzugleichen, die in der Tabelle 138 gespeichert sind. Die Tabelle 138 enthält beispielsweise eine Vielzahl von Attributen, welche zugehörige ID-Token 100 und/oder einen dem entsprechenden Token 100 zugeordneten Nutzer in eindeutiger Weise identifizieren. Die in der Tabelle 138 gespeicherten Attribute identifizieren dabei diejenigen ID-Token 100 und/oder zugehörigen Nutzer, denen der Zugriff auf die Sicherungseinrichtung 144 gewährt wird.

Nachdem also im Schritt 204 nach der Terminal-Authentisierung und der ID-Token-Authentisierung das Attribut 112 gelesen wurde, findet in Schritt 206 mittels der Programminstruktionen 136 seitens des Zugangsmanagementservers 130 eine Überprüfung statt, ob eine Freigabe des Zugriffs auf die Sicherungseinrichtung 144 erteilt werden darf oder nicht. Findet sich im vorliegenden Beispiel das Attribut 112 in der Tabelle 138 hinterlegt, wird die Freigabe erteilt. Daraufhin wird beispielsweise zur Entriegelung einer Verriegelungsanlage einer Zugangskotrolleinrichtung wie etwa eine Tür an die Sicherungseinrichtung 144 ein Entriegelungssignal über das Netzwerk 142 gesendet. Im Fall des Zugriffs auf Daten wird ein entsprechendes Zugriffsfreigabesignal für die Freigabe eines Datenzugriffs an die Sicherungseinrichtung 144 übermittelt und die Sicherungseinrichtung erteilt daraufhin die Freigabe eines Zugriffs beispielsweise auf sensitive Bereiche einer Datenbank.

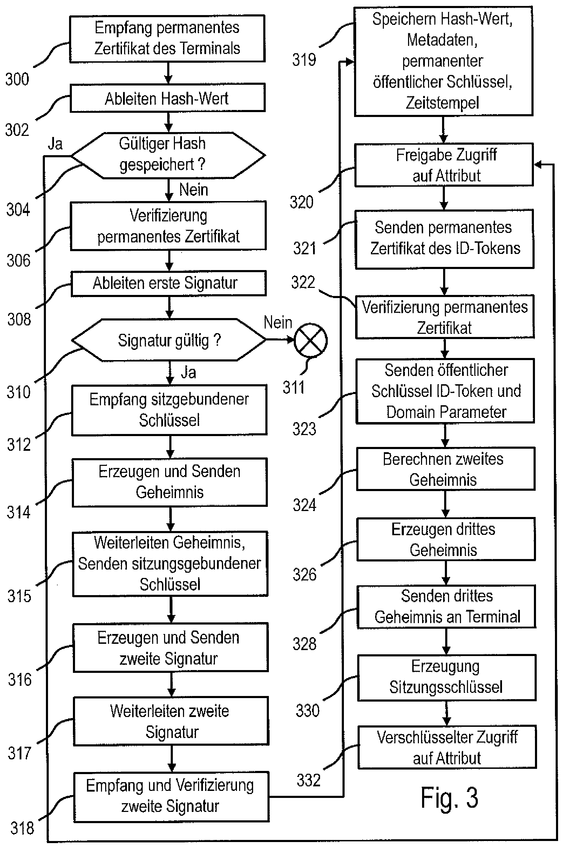

Bezug nehmend auf das Flussdiagramm, welches in Figur 3 gezeigt ist, sei im Folgenden beispielhaft erläutert, wie die obig beschriebene Terminal-Authentisierung und ID-Token-Authentisierung ablaufen können. Figur 3 zeigt ein Flussdiagramm eines Verfahrens zur Kontrolle des Zugriffs eines Terminals 118 auf ein in einem ID-Token 100 gespeichertes Attribut 112. Zunächst empfängt in Schritt 300 das ID-Token 100 über seine Schnittstelle 104 ein permanentes Zertifikat des Terminals 118. Aus dem permanenten Zertifikat wird durch das ID-Token 100 in Schritt 302 ein Zugriffstoken in Form eines Hash-Werts abgeleitet. Das permanente Zertifikat umfasst beispielsweise den besagten Hash-Wert sowie eine Signatur, welche aus dem Hash-Wert und einem privaten Signaturschlüssel sowie optionalen Metadaten gebildet wurde. Beispielsweise gilt, dass mittels eines dem permanenten Zertifikat zugehörigen öffentlichen Schlüssels eine Authentisierung des Terminals 118 möglich ist.

In Schritt 304 wird überprüft, ob der Hash-Wert bereits als gültiger Hash-Wert 114 in dem Speicher 106 gespeichert ist. Im Folgenden wird beispielhaft davon ausgegangen, dass der in Schritt 302 durch das ID-Token 100 abgeleitete Hash-Wert noch nicht in dem Speicher 106 als gültiger Hash-Wert 114, d.h. Zugriffstoken, zusammen mit den zugehörigen Metadaten gespeichert ist. Diese Überprüfung erfolgt beispielsweise mittels eines Prozessors 102 des ID-Tokens 100, wobei in dem Speicher 106 Programminstruktionen 108 enthalten sind, mittels welcher sämtliche bezüglich des ID-Tokens 100 beschriebenen Schritte durchgeführt werden können.

Nachdem unter dieser Voraussetzung in Schritt 304 festgestellt wurde, dass der Hash-Wert 114 in dem ID-Token 100 nicht gespeichert ist, erfolgt in den nachfolgenden Schritten eine vollständige Authentisierung des Terminals 118 durch das ID-Token 100. In Schritt 306 erfolgt eine Verifizierung des permanenten Zertifikats, wobei eine erste aus dem permanenten Zertifikat des Terminals 118, welches in Schritt 300 empfangen wurde, abgeleitete Signatur mit dem Hash-Wert und einem dem permanenten Zertifikat zugehörigen statischen öffentlichen Schlüssels des Terminals 118 verifiziert wird. Der zugehörige statische öffentliche Schlüssel des Terminals 118 kann ebenfalls zusammen mit dem Zertifikat oder in dem Zertifikat des Terminals 118 in Schritt 300 empfangen werden. Das Ableiten der ersten Signatur und die Verifizierung der ersten Signatur sind in den Schritten 308 und 310 gezeigt.

Optional ist es möglich, dass das permanente Zertifikat in Schritt 300 in einer von dem Terminal 118 gesendeten Nachricht empfangen wird, wobei diese Nachricht ferner ein Wurzelzertifikat einer Wurzelzertifizierungsstelle umfasst. Das permanente Zertifikat des Terminals 118 kann dann nach Schritt 304 zusätzlich über das Wurzelzertifikat mittels eines in dem ID-Token 100 im Speicher 106 gespeicherten öffentlichen Schlüssels 116 einer Wurzelzertifizierungsstelle verifiziert werden. Damit kann sichergestellt werden, dass der statische öffentliche Schlüssel des Terminals 118 vertrauenswürdig ist.

Sofern im Schritt 310 festgestellt wird, dass die erste Signatur gültig ist und zudem optional auch die Vertrauenswürdigkeit das permanente Zertifikat des Terminals 118 bestätigt wurde, wird das Verfahren fortgesetzt. Ansonsten kommt es nach Schritt 310 zu einem Abbruch 311 des Authentisierungsverfahrens, womit die Authentisierung fehlgeschlagen ist.

Wird das Verfahren fortgesetzt, so wird in Schritt 312 ein sitzungsgebundener temporärer öffentlicher Schlüssel vom Terminal 118 an das ID-Token gesendet. Der sitzungsgebundene temporäre öffentliche Schlüssel des Terminals 118 ist dabei ein für die aktuelle Kommunikationssitzung zwischen ID-Token 100 und Terminal 118 erzeugter kryptographischer Schlüssel.

Auf den Empfang des sitzungsgebundenen temporären öffentlichen Schlüssels in Schritt 312 hin erfolgt in Schritt 314 das Erzeugen und Senden eines zufälligen ersten Geheimnisses von dem ID-Token 100 an das Terminal 118. Dieses zufällige erste Geheimnis wird auch als "challenge" bezeichnet. Es ist an dem Terminal 118 die mit dem privaten Schlüssel 160 des Terminals 118 signierte "challenge" als "response", d.h. Antwort, an das ID-Token zurückzusenden. Damit weist das Terminal 118 nach, dass es Zugriff auf den privaten Schlüssel 160 hat.

Nach dem in Schritt 314 das ID-Token 100 das erste Geheimnis erzeugt und an das Terminal 118 gesendet hat, wird das Geheimnis in Schritt 315 von dem Terminal 118 an den Authentisierungsserver 150 weitergeleitet. In einem geschützten Speicherbereich des Speichers 156 ist ein dem Terminal 118 zugeordneter statischer privater Schlüssel 160 gespeichert. Der Authentisierungsserver 150 erzeugt auf den Empfang des ersten Geheimnisses hin in Schritt 316 eine Signatur unter Verwendung des statischen privaten Schlüssels 160, eines sitzungsgebundenen temporären öffentlichen Schlüssels des Terminals 118, welchen das Terminal 118 ebenfalls an den Authentisierungsserver 150 sendet (beispielweise in Schritt 315), sowie des entsprechenden ersten Geheimnisses. Der Authentisierungsserver 150 übermittelt die so erzeugte "response" in Form der Signatur an das Terminal 118, welches die empfangene Signatur in Schritt 317 an das ID-Token 100 weiterleitet. In Schritt 318 empfängt und verifiziert das ID-Token 100 die "response". Die Verifizierung der vom Terminal 118 empfangenen Signatur erfolgt durch das ID-Token 100 unter Verwendung des ersten Geheimnisses, des dem permanenten Zertifikat zugehörigen öffentlichen Schlüssels des Terminals 118 und dem sitzungsgebundenen temporären öffentlichen Schlüssel des Terminals 118, welchen das Terminal 118 in Schritt 312 empfangen hat.

Im Falle einer erfolgreichen Verifizierung dieser zweiten Signatur erfolgt in Schritt 319 ein Speichern des in Schritt 302 abgeleiteten Hash-Wertes zusammen mit den Metadaten, dem statischen öffentlichen Schlüssels des Terminals und einem optionalen Zeitstempel in dem ID-Token 100. Auf Schritt 319 folgt in Schritt 320 schließlich die Freigabe des Zugriffs durch das Terminal 118 auf das Attribut 112.

Vor dem Ausführen des tatsächlichen Zugriffs durch das Terminal 118 auf das Attribut 112, wird in den nachfolgenden Schritten zusätzliche eine ID-Token-Authentisierung, auch bezeichnet als Chip-Authentisierung, entsprechend dem Schritt 202 der Figur 2 durchgeführt. Vor der ID-Token-Authentisierung empfängt das Terminal 118 zunächst in Schritt 321 ein permanentes Zertifikat des ID-Tokens 100. In Schritt 322 verifiziert das Terminal 118 das empfangene Zertifikat des ID-Tokens 118 durch Prüfen der zugehörigen Dokumenten-PKI. Zudem kann das Terminal 118 prüfen, ob das Zertifikat des ID-Tokens gesperrt ist. Hierzu liest das Terminal 118 eine Sperr-ID aus dem Zertifikat des ID-Tokens aus und sendet eine Sperranfrage an den Authentisierungsserver 150. Der Authentisierungsserver 150, der Zugriff auf eine beispielsweise in dem Speicher 156 gespeicherte Sperrliste 162 besitz, antwortet mit einer Sperrinformation. Aus der Sperrinformation kann das Terminal 118 ableiten, ob das Zertifikat des ID-Tokens 100 gesperrt ist. Bei der Sperrliste 162 handelt es sich beispielsweise um eine Negativ- oder Positivliste. Das Zertifikat gilt als gesperrt, wenn die Speerliste 162 als Negativliste die Sperr-ID des Zertifikats umfasst oder wenn die Speerliste 162 als Positivliste die Sperr-ID des Zertifikats nicht umfasst. Nach einer Ausführungsform sendet das Terminal 118 die Speer-ID als Teil der Speeranfrage an den Authentisierungsserver 150 und erhält als Antwort eine Sperrinformation, die anzeigt ob das Zertifikat gesperrt ist. Hierzu gleicht der Authentisierungsserver 150 die vom Terminal 118 empfangene Sperr-ID mit den in der Sperrliste 162 enthaltenen Sperr-IDs ab. Diese Abfrage des Sperrstatus kann beispielsweise auch mittels "Online Certificate Status Protocol" (OCSP) erfolgen, wobei der Authentisierungsserver 150 als Validierungsdienst auftritt. OSCP ist ein Netzwerkprotokoll, das es Clients ermöglicht, den Status von X.509-Zertifikaten bei einem Validierungsdienst abzufragen. Nach einer weiteren Ausführungsform umfasst die Sperrinformation die aktuelle Sperrliste 162, sodass das Terminal 118 selbst die ausgelesene Sperr-ID mit den in der vom Authentisierungsserver 150 empfangenen Sperrliste 162 enthaltenen Sperr-IDs abgleichen kann. Unter der Voraussetzung, dass das permanente Zertifikat des ID-Tokens 100 nicht gesperrt ist, wird das Verfahren fortgesetzt.

Auf eine positive Verifizierung in Schritt 322 hin wird in den nachfolgenden Schritten die ID-Token-Authentisierung ausgeführt. Hierzu sendet das ID-Token in Schritt 323 seinen öffentlichen Schlüssel und einen für elektrische Kurvenkryptografie notwendigen Domainparameter an das Terminal 118. Im Gegenzug verfügt das ID-Token 100 bereits über den sitzungsgebundenen temporären öffentlichen Schlüssel des Terminals 118. Dies ermöglicht es sowohl dem ID-Token 100 als auch dem Terminal 118, in Schritt 324 jeweils ein zweites Geheimnis zu erzeugen. Auf Seiten des ID-Tokens 100 gehen in die Berechnung des zweiten Geheimnisses der private Schlüssel des ID-Tokens 100, der sitzungsgebundene öffentliche Schlüssel des Terminals 118 und der Domainparameter ein. Auf Seiten des Terminals gehen in die Berechnungen des zweiten Geheimnisses der sitzungsgebundene private Schlüssel des Terminals 100, der öffentliche Schlüssel des ID-Tokens 118 und der Domainparameter ein. Es wird also auf jeder Seite unabhängig voneinander das gleiche zweite Geheimnis erzeugt.

Nachdem beide Seiten jeweils das gemeinsame zweite Geheimnis berechnet haben, erzeugt das ID-Token 100 in Schritt 326 ein drittes zufälliges Geheimnis und leitet aus diesem dritten Geheimnis in Schritt 330 unter Verwendung des zweiten Geheimnisses einen Sitzungsschlüssel ab. Zudem wird in Schritt 328 das dritte Geheimnis an das Terminal 118 übermittelt. Das Terminal 118 selbst kann unter Verwendung des von ihm berechneten zweiten Geheimnisses und des nun empfangenen dritten Geheimnisses ebenfalls den Sitzungsschlüssel erzeugen. Bei den Sitzungsschlüsseln handelt es sich somit um ein Paar symmetrischer Schlüssel.

Anschließend erfolgt in Schritt 332 ein verschlüsselter Zugriff durch das Terminal auf das Attribut, wobei die Verschlüsselung in Form einer Ende-zu-Ende-Verschlüsselung unter Verwendung der symmetrischen Sitzungsschlüssel erfolgt. Unter einer "Ende-zu-Ende-Verschlüsselung" wird eine Verschlüsselung übertragener Daten über alle Übertragungsstationen hinweg verstanden, wobei die zu übertragenden Daten durch den Sender verschlüsselt und erst durch den Empfänger wieder entschlüsselt werden.

Wird nun das ID-Token 100 in mehreren zeitlich auseinanderliegenden Sitzungen zum Zugriff auf die Sicherungseinrichtung 144 verwendet, kann eine modifizierte verkürzte Authentisierung des Terminals 118 durch das ID-Token 100 zum Einsatz kommen. Beispielsweise kann bei einem erstmaligen Zugriff auf die Sicherungseinrichtung 144 das Protokoll der Terminal-Authentisierung vollständig mit den obengenannten Schritten 306 bis 319 zum Einsatz kommen. Bei jedem weiteren Versuch mittels des ID-Tokens 100 Zugriff auf die Sicherungseinrichtung 144 zu erlangen, kommt die verkürzte Authentisierung des Terminals 118 zum Einsatz. Hierzu ist vorgesehen, dass das ID-Token 100 nach Ableiten des Hash-Werts in Schritt 302 seinen Speicher 106 dahingehend überprüft, ob der Hash-Wert bereits als ein aus einer früheren Authentisierung resultierender gültiger Hash-Wert 114 gespeichert ist. Ist dies der Fall, so wird anstelle von Schritt 306 direkt mit dem Schritt 320 und der Chip-Authentisierung fortgefahren.

Um nach einer einmaligen Terminal-Authentisierung nicht für alle Zeit die Vertrauenswürdigkeit des Terminals 118 annehmen zu müssen, kann insbesondere der Hash-Wert zusammen mit einem Ablaufdatum, -zeitpunkt oder einer Gültigkeitsdauer in dem ID-Token 100 gespeichert werden. Der Hash-Wert wird also mit einem Zeitstempel verknüpft in dem ID-Token 100 abgelegt. Der Zeitstempel kann beispielsweise ein Ablaufdatum des Hash-Wertes angeben. Ist dieses Ablaufdatum zeitlich überschritten, so wird trotz des Vorhandenseins des Hash-Werts 114 im Speicher 106 des ID-Tokens 100 für diesen gespeicherten Hash-Wert 114 keine Gültigkeit mehr gegeben sein, sodass Schritte 304 folgend die erneute Durchführung der Authentisierung des Terminals 118 mit den Schritten 306 bis 319 erfolgen muss.

Die Gültigkeitsdauer des Zugriffstokens, bzw. des Hash-Wert 114, kann auch in Form einer maximalen Anzahl von zeitlich auseinanderliegenden Sitzungen festgelegt sein. Dabei wird die Anzahl an Sitzungen, für die der Hash-Wert 114 verwendet wird, mitgezählt und abgespeichert. Erst nach dem Erreichen dieser maximalen Anzahl von Sitzungen wird eine erneute vollständige Authentisierung notwendig.

Zudem kann vorgesehen sein, dass zusammen mit dem Hash-Wert Metadaten 114 in dem Speicher 106 des ID-Tokens 100 gespeichert werden, bzw. vom Hash-Wert umfasst werden. Gegebenenfalls kann auch nur ein Teil der Metadaten dort gespeichert werden. Die Metadaten können beispielsweise eine Zugriffsberechtigung angeben, die festlegt auf welche der im Speicher 106 befindlichen Attribute 112 das Terminal 118 zugreifen darf. Im Zuge der Prüfung in Schritt 304, ob ein dem Terminal 118 zugehöriger gültiger Hash-Wert im ID-Token 100 gespeichert ist, können zusätzlich die mit dem Hash-Wert verknüpft gespeicherten Metadaten aus dem Speicher 106 geprüft werden. Diese Metadaten können gelesen und für die weitere Kommunikation mit dem Terminal 118 herangezogen werden. Neben Zugriffsberechtigungen des Terminals können die Metadaten beispielweise auch eine eindeutige ID, eine sog. "unique identifier" (UID) des Terminals umfassen. Bei der eindeutigen ID kann es sich beispielsweise um eine Seriennummer oder eine Zufallszahl handeln.

Zudem kann der statische öffentliche Schlüssel des Terminals verknüpft mit dem Hash-Wert im Speicher 106 gespeichert sein. Im Zuge von Schritt 304 oder nachfolgend kann dieser mit dem Hash-Wert verknüpft gespeicherte öffentliche Schlüssel gelesen und ebenfalls für die weitere Kommunikation mit dem Terminal verwendet werden.

Alle in dieser Beschreibung genannten kryptographischen Schlüssel werden je nach Anforderung in komprimierter oder unkomprimierter Form verwendet. Dabei ist der Fachmann ist dazu in der Lage sowohl mit komprimierten als auch mit unkomprimierten Formen der genannten kryptographischen Schlüssel zu arbeiten. Dies betrifft insbesondere den sitzungsgebundenen temporären öffentlichen Schlüssel des Terminals 118, welcher üblicherweise im Rahmen der Terminal-Authentisierung in komprimierter Form an das ID-Token (Schritt 312) und den Authentisierungsserver (Schritt 315) gesandt wird.

Der Zugangsmanagementserver 130 ist in der Lage, mit dem Terminal 118 über die Schnittstelle 134 und das Netzwerk 142 zu kommunizieren. Eine Kommunikation zwischen Terminal 118 und Zugangsmanagementserver 130 erfolgt unter Verwendung einer Verschlüsselung, sodass das Terminal 118 eine Zugriffsanfrage bezüglich eines Zugriffs auf die Sicherungseinrichtung 144 an den Zugangsmanagementserver 130 richtet, wobei die Zugriffsanfrage das aus dem ID-Token ausgelesene Attribut 112 in verschlüsselter Weise umfasst. Beispielsweise kann auch eine Ende-zu-Ende-Verschlüsselung zum Einsatz kommen.

Um insgesamt die Zugriffsgeschwindigkeit des Terminals 118 auf das Attribut 112 weiter zu erhöhen, können verschiedene Optimierungen durchgeführt werden. So kann beispielsweise seitens des Terminals darauf verzichtet werden, dem ID-Token 100 eine Referenz der Zertifizierungsstelle des übersandten permanenten Zertifikats mitzuteilen. Vielmehr kann festgelegt werden, dass grundsätzlich eine einzige Zertifizierungsstelle zum Einsatz kommt. Damit wird auch das Datenübertragungsvolumen reduziert und in der Folge die Datenübertragungsgeschwindigkeit erhöht.

Eine weitere Möglichkeit besteht darin, den Schritt 314 mit Erzeugen und Senden des Geheimnisses durch das ID-Token 100 automatisch auf den Empfang des sitzungsgebundenen temporären öffentlichen Schlüssels in Schritt 312 hin durchzuführen. Schritt 314 erfolgt in diesem Falle unmittelbar auf Schritt 312, ohne dass dies durch ein Kommando seitens des Terminals 118, wie etwa ein "Get Challenge", explizit angefragt wird.

Zudem kann nach Ausführungsformen im Rahmen der ID-Token-Authentisierung auf eine konkrete Anforderung des öffentlichen Schlüssels des ID-Tokens 100 durch das Terminal 118 je nach Referenz des Schlüssels verzichtet werden. Beispielsweise sendet das ID-Token 100 den öffentlichen Schlüssel und den zum öffentlichen Schlüssel zugehörigen Domainparameter in Schritt 323 automatisch an das Terminal 118, nach Schritt 320 und/oder allgemein nachdem die Terminal-Authentifizierung erfolgreich abgeschlossen wurde.

Verfügt das ID-Token 100 über mehrere verschiedene öffentliche Schlüssel, so wird einer dieser Schlüssel im Voraus als Standardschlüssel definiert und bei Ausbleiben einer expliziten Anforderung des Schlüssels seitens des Terminals 118 wird der besagte Standardschlüssel verwendet zur ID-Token-Authentisierung verwendet und in Schritt 323 an das Terminal 118 gesendet. Der Schritt 323 kann beispielsweise als Reaktion auf den Erhalt eines "General Authenticate" Kommandos des Terminals 118 erfolgen.

Weitere Optimierungen können darin liegen, dass aus Sicherheitsgründen elliptische Kurven verwendet werden mit einem q, welcher mindestens eine Bitlänge von 324 Bits aufweist, um das Terminal-Zertifikat zu signieren und während das ID-Token-Authentifizierung den symmetrischen Sitzungsschlüssel zu erzeugen. Ferner kann die Anforderung an den symmetrischen Sitzungsschlüssel dahingehend gewählt werden, dass ein AES-128-Schlüssel zum Einsatz kommt.

Die obig beschriebenen Hash-Verfahren können beispielsweise unter Verwendung eines SHA-256-Hash-Algorithmus durchgeführt werden, zumal SHA-256 im Vergleich zu SHA-224 denselben Rechenaufwand zur Hash-Berechnung bei höherer Sicherheit aufweist.

Eine weitere Beschleunigung kann dadurch erzielt werden, dass eine "Ein-Schritt-Hierarchie" bezüglich des Wurzelzertifikats zum Einsatz kommt. Dabei wird Zwischenzertifikate verzichtet werden und das ID-Token 100 lediglich ein einzelnes Wurzelzertifikat aufweisen muss, um damit vollständig die Verifizierung des permanenten Zertifikats des Terminals 118 durchzuführen.

Um weiter den Datenaustausch zwischen Terminal und ID-Token zu minimieren, kann das permanente Zertifikat des Terminals ohne jegliche Zertifikatserweiterung (Certificate Extensions) versendet werden. Nach Ausführungsformen werden zudem die kleinsten X.509-Zertifikate bezüglich der Wurzelzertifizierungsstelle und der Zertifizierungsstelle, welche die Zertifikate des ID-Tokens 100 signiert, verwendet.

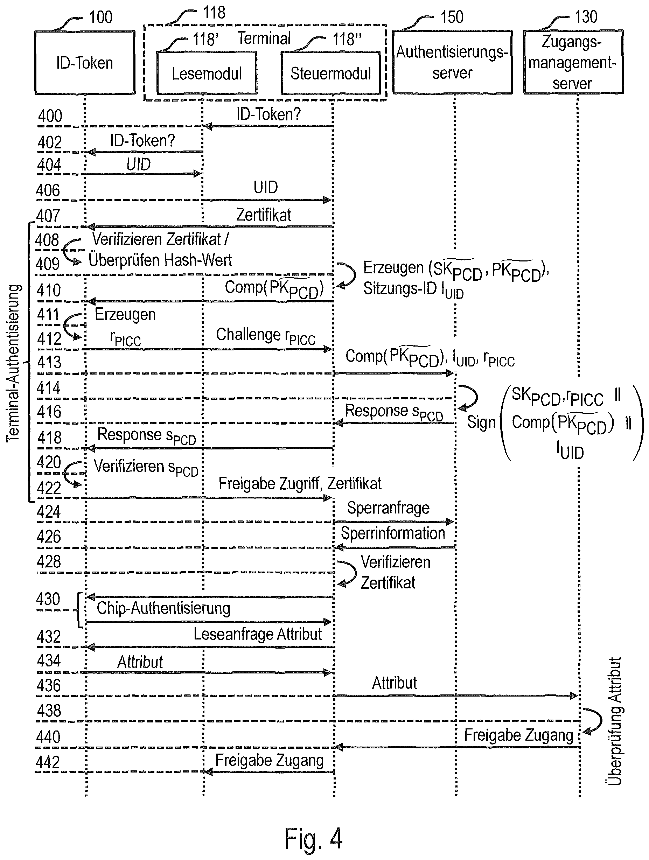

Figur 4 zeigt ein UML-Diagramm des erfindungsgemäßen Verfahrens aus Figur 3. Das Terminal 118 umfasst ein Lesemodul 118' zur Kommunikation mit dem ID-Token 100 sowie ein Steuermodul 118" zur Steuerung der Kommunikation. In Schritt 400 sendet das Steuermodul 118" eine Anfrage an das Lesemodul 118', ob ein ID-Token 100 in Reichweite ist. In Schritt 402 sendet das Lesemodul 118' eine Anfrage aus, ob ein ID-Token 100 in Reichweite ist. Empfängt ein ID-Token 100 die Anfrage des Lesemoduls 118' antwortet das ID-Token 100 in Schritt 404 mit einem UID. Der UID wird in Schritt 406 vom Lesemodul 118' an das Steuermodul 118" weitergeleitet. In Schritt 407 sendet das Steuermodul 118" daraufhin das permanente Zertifikat des Terminals 118 über das Lesemodul 118' zu dem ID-Token 100. Das ID-Token 100 empfängt in Schritt 408 das permanente Zertifikat des Terminals 118, verifiziert das empfangene Zertifikat und überprüft den abgeleiteten Hash-Wert, was den Schritten 300 bis 310 der Figur 3 entspricht. In Schritt 409 erzeugt das Steuermodul 118" ein sitzungsgebundenes temporäres asymmetrisches Schlüsselpaar $\widetilde{SK}_{PCD}$, $\widetilde{PK}_{PCD}$ sowie eine Sitzungs-ID $I_{UID}$. Der sitzungsgebundene temporäre öffentliche Schlüssel $\widetilde{PK}_{PCD}$ wird komprimiert und der resultierende komprimierte öffentliche Schlüssel $\mathrm{Comp}\left(\widetilde{PK}_{PCD}\right)$ in Schritt 410 an das ID-Token 100 gesendet. In Schritt 411 erzeugt das ID-Token 100 eine erstes Geheimnis in Form einer Challenge $r_{PICC}$ und sendet diese in Schritt 412 an das Steuermodul 118". Das Steuermodul 118" leitet in Schritt 413 die Challenge $r_{PICC}$ zusammen mit dem komprimierten öffentlichen Schlüssel $\mathrm{Comp}\left(\widetilde{PK}_{PCD}\right)$ und der Sitzungs-ID $I_{UID}$ an den Authentisierungsserver 150 weiter. Der Authentisierungsserver 150 signiert in Schritt 414 die Challenge $r_{PICC}$ mit dem statischen privaten Schlüssel $SK_{PCD}$ des Terminals 118, der beispielsweise auf dem Authentisierungsserver 150 gespeichert ist. Die resultierende Signatur

$$s_{PCD} = \mathrm{Sign}\left(SK_{PCD}, r_{PICC} \parallel \mathrm{Comp}\left(\widetilde{PK}_{PCD}\right) \parallel I_{UID}\right)$$

wird in Schritt 416 als Response $s_{PCD}$ auf die Challenge $r_{PICC}$ an das Steuermodul 118" gesendet und von diesem in Schritt 418 an das ID-Token 100 weitergeleitet. In Schritt 420 verifiziert das ID-Token 100 die Response $s_{PCD}$ und gibt auf ein positives Verifikationsergebnis hin den Zugriff auf das Attribut 112 in Schritt 422 frei. Die Schritte 408 bis 422 entsprechen der Terminal-Authentisierung gemäß Schritt 200 der Figur 2 sowie den Schritten 300 bis 320 der Figur 3.

In Schritt 422 sendet das ID-Token 100 zudem ein Zertifikat des ID-Tokens 100 an das Steuermodul 118". Das Steuermodul 118" liest eine Sperr-ID aus dem empfangenen Zertifikat aus und sendet in Schritt 424 eine Sperranfrage an den Authentisierungsserver 150, der in Schritt 426 mit einer Sperrinformation antwortet. Das Steuermodul 118" verifiziert in Schritt 428 das Zertifikat des ID-Tokens 100 durch Überprüfung der zugehörigen Dokumenten-PKI und der Sperrinformation. Die Schritte 422 bis 428 entsprechen den Schritten 321 und 322 der Figur 3.

In den Schritt 430 erfolgt eine Chip-Authentisierung, d.h. ID-Token-Authentisierung, des ID-Tokens 100 gegenüber dem Steuermodul 118". Der Schritt 430 entspricht der Terminal-Authentisierung gemäß Schritt 202 der Figur 2 sowie den Schritten 323 bis 332 der Figur 3. In den Schritten 432 und 434 erfolgt ein verschlüsselter Lesezugriff des Steuermoduls 118" auf das Attribut 112 im Speicher 106 des ID-Tokens 100. Der verschlüsselte Zugriff erfolgt über das Lesemodul 118', wobei eine Ende-zu-Ende-Verschlüsselung zwischen Steuermodul 118" und ID-Tokens 100 verwendet wird. Das ausgelesene Attribut 112 wird in Schritt 436 von dem Steuermodul 118" an den Zugangsmanagementserver 130 über das Netzwerk 142 weitergeleitet. Der Zugangsmanagementserver 130 empfängt das Attribut 112 und prüft dessen Gültigkeit in Schritt 438 durch Abgleichen mit den in der Tabelle 138 gespeicherten Attributen. Ist das Attribut 112 als gültiges Attribut in der Tabelle 138 gespeichert, so gibt der Zugangsmanagementserver 130 in Schritt 440 für das ID-Token 10 den Zugang zur bzw. über die Sicherungseinrichtung 144 frei. Eine entsprechende Freigabe wird vom Zugangsmanagementserver 130 an das Steuermodul 118" und von diesem in Schritt 442 an das Lesemodul 118' gesendet. Nach Ausführungsformen ist das Lesemodul 118' dazu konfiguriert die Freigabe über das Netzwerk 142 an die Sicherungseinrichtung 144 weiterzuleiten (nicht gezeigt). Hierzu ist beispielsweise die Schnittstelle 122 vom Lesemodul umfasst und zusätzlich zur Kommunikation mit dem ID-Token 100 mittels RFID auch dazu konfiguriert über das Netzwerk 142 zu kommunizieren. Nach weiteren Ausführungsformen umfasst das Terminal 118 eine zusätzliche Schnittstelle zur Kommunikation über das Netzwerk 142. Auf den Empfang der Freigabe hin entriegelt die Sicherungseinrichtung 144 beispielsweise eine Verriegelungsanlage einer Zugangskontrolleinrichtung, wie etwa ein elektrisches Schloss einer Tür, oder ermöglicht in sonstiger Weise den Zugang zu einem von der Sicherungseinrichtung 144 gesicherten Bereich.

Bezugszeichenliste

| | |
|---|---|
| 10 | System |
| 100 | ID-Token |
| 102 | erster Prozessor |
| 104 | erste Schnittstelle |
| 106 | erster Speicher |
| 108 | erste Instruktionen |
| 110 | temporäres Schlüsselpaar |
| 112 | Attribut |
| 114 | Hash-Wert und Metadaten |
| 116 | öffentlicher Schlüssel der Wurzelzertifizierungsstelle |
| 117 | Zertifikat des ID-Tokens |
| 118 | Terminal |
| 118' | Lesemodul |
| 118" | Steuermodul |
| 120 | zweiter Prozessor |
| 122 | zweite Schnittstelle |
| 124 | zweite Instruktionen |
| 126 | Schlüsselpaar |
| 127 | Zertifikat des Terminals |
| 128 | zweiter Speicher |
| 130 | Zugangskontrolleinrichtung |
| 132 | vierter Prozessor |
| 134 | vierte Schnittstelle |
| 136 | vierte Instruktionen |
| 138 | Tabelle |
| 140 | vierter Speicher |
| 142 | Netzwerk |
| 144 | Sicherungseinrichtung |
| 150 | Authentisierungsserver |
| 152 | dritter Prozessor |
| 154 | dritte Schnittstelle |
| 156 | dritter Speicher |
| 158 | dritte Instruktionen |
| 160 | privater Schlüssel des Terminals |
| 162 | Sperrliste |

**Patentansprüche**

1. Computerimplementiertes Verfahren zur Kontrolle eines Zugriffs eines Terminals (118) auf ein in einem ID-Token (100) gespeichertes Attribut (112) und zur Freigabe eines Zugriffs auf eine zugriffsbeschränkte Sicherungseinrichtung (144), wobei das Verfahren eine Authentisierung des Terminals (118) durch das ID-Token (100) und eine Authentisierung des ID-Tokens (100) durch das Terminal (118) umfasst, wobei eine Authentisierung des Terminals (118) durch das ID-Token (100) über einen Authentisierungsserver (150) erfolgt, welcher einen dem Terminal (118) zugeordneten statischen privaten Schlüssel (160) umfasst, wobei die Authentisierung über den Authentisierungsserver (150) umfasst:

- Senden eines ersten Zugriffstokens von dem Terminal (118) an das ID-Token (100),
- Verifizierung einer ersten Signatur des ersten Zugriffstokens mit einem dem Terminal (118) zugeordneten statischen öffentlichen Schlüssel durch das ID-Token (100),
- Erzeugen und Senden eines sitzungsgebundenen temporären öffentlichen Schlüssels durch das Terminal (118) an das ID-Token (100),
- Erzeugen und Senden eines zufälligen ersten Geheimnisses durch das ID-Token (100) an das Terminal (118),
- Weiterleiten des zufälligen ersten Geheimnisses durch das Terminal (118) an den Authentisierungsserver (150) und Senden des sitzungsgebundenen temporären öffentlichen Schlüssels des Terminals (118) an den Authentisierungsserver (150),
- Erstellen einer zweiten Signatur des zufälligen ersten Geheimnisses durch den Authentisierungsserver (150) mit dem dem Terminal (118) zugeordneten statischen privaten Schlüssel (160) und dem sitzungsgebundenen temporären öffentlichen Schlüssel des Terminals (118) und Senden der zweiten Signatur an das Terminal,
- Weiterleiten der zweiten Signatur durch das Terminal (118) an das ID-Token (100),
- Verifizierung der zweiten Signatur des zufälligen ersten Geheimnisses durch das ID-Token (100) unter Verwendung des zufälligen ersten Geheimnisses, des sitzungsgebundenen temporären öffentlichen Schlüssels des Terminals (118) und des dem Terminal (118) zugeordneten statischen öffentlichen Schlüssels,
- nach erfolgreicher Verifizierung der ersten und zweiten Signatur, Freigabe des Zugriffs des Terminals (118) auf das Attribut (112),
wobei der Zugriff des Terminals (118) auf das Attribut (112) nur unter der Voraussetzung der erfolgreichen Authentisierung des ID-Tokens (100) durch das Terminal (118) erfolgt
- nach Freigabe des Zugriffs des Terminals (118) auf das Attribut (112), Lesen des Attributs (112) durch das Terminal (118) und versenden einer Zugriffsanfrage an einen Zugangsmanagementserver (130), wobei die Zugriffsanfrage das Attribut (112) verschlüsselt umfasst,
- Entschlüsseln und Verifizieren des Attributs (112) durch den Zugangsmanagementserver (130), wobei der Zugangsmanagementserver (130) im Falle eines erfolgreichen Verifizierens den Zugang zu der Sicherungseinrichtung (144) freigibt.

2. Computerimplementiertes Verfahren nach Anspruch 1, wobei das erste Zugriffstoken auf eine erfolgreiche Verifizierung der ersten und zweiten Signatur hin als gültiges Zugriffstoken in dem ID-Token (100) gespeichert wird.

3. Computerimplementiertes Verfahren nach einem der vorhergehenden Ansprüche, wobei die Authentisierung durch das ID-Token (100) auf den Empfang des ersten Zugriffstoken hin ein automatisches Überprüfen umfasst, ob in dem ID-Token (100) ein mit dem empfangenen ersten Zugriffstoken übereinstimmendes gültiges zweites Zugriffstoken gespeichert ist, wobei im Falle dass ein gültiges zweites Zugriffstoken in dem ID-Token (100) gespeichert ist eine Freigabe eines Zugriffs des Terminals (118) auf das in dem ID-Token (100) gespeicherte Attribut (112) erfolgt, wobei im Falle dass kein gültiges zweites Zugriffstoken in dem ID-Token (100) gespeichert ist die Authentisierung des Terminals (118) durch das ID-Token (100) über den Authentisierungsserver (150) erfolgt.

4. Computerimplementiertes Verfahren nach Anspruch 3, wobei das erste Zugriffstoken eine Zugriffsberechtigung umfasst und wobei das Verfahren ferner umfasst:

- im Falle dass kein gültiges zweites Zugriffstoken in dem ID-Token (100) gespeichert ist, nach dem erfolgreichen Verifizieren der ersten und zweiten Signatur Verknüpfen und Speichern der Zugriffsberechtigung mit dem ersten Zugriffstoken in dem ID-Token (100), wobei eine Freigabe des Zugriffs des Terminals (118) auf das Attribut (112) entsprechend der Zugriffsberechtigung erfolgt,
- im Falle dass ein gültiges zweites Zugriffstoken in dem ID-Token (100) gespeichert ist, Lesen der mit dem gültigen zweiten Zugriffstoken verknüpft gespeicherten Zugriffsberechtigung, wobei eine Freigabe des Zugriffs des Terminals (118) auf das Attribut (112) entsprechend der Zugriffsberechtigung erfolgt.

5. Computerimplementiertes Verfahren nach einem der Ansprüche 3 oder 4, wobei das Verfahren ferner umfasst:

- im Falle dass kein gültiges zweites Zugriffstoken in dem ID-Token (100) gespeichert ist, nach dem erfolgreichen Verifizieren der ersten und zweiten Signatur Verknüpfen und Speichern des statischen öffentlichen Schlüssels des Terminals (118) mit dem ersten Zugriffstoken in dem ID-Token (100), wobei eine weitere Kommunikation mit dem Terminal (118) verschlüsselt unter Verwendung des statischen öffentlichen Schlüssels des Terminals (118) erfolgt,
- im Falle dass ein gültiges zweites Zugriffstoken in dem ID-Token (100) gespeichert ist, Lesen des mit dem gültigen zweiten Zugriffstoken verknüpft gespeicherten statischen öffentlichen Schlüssels des Terminals (118), wobei eine weitere Kommunikation mit dem Terminal (118) verschlüsselt unter Verwendung des statischen öffentlichen Schlüssels des Terminals (118) erfolgt.

6. Computerimplementiertes Verfahren nach Anspruch 5, wobei der statische öffentliche Schlüssel des Terminals (118) in dem ersten Zugriffstoken enthalten ist.

7. Computerimplementiertes Verfahren nach einem der Ansprüche 3 bis 6, wobei das Verfahren ferner umfasst:

   - im Falle dass kein gültiges zweites Zugriffstoken in dem ID-Token (100) gespeichert ist, nach dem erfolgreichen Verifizieren der ersten und zweiten Signatur Erzeugen und Verknüpfen eines Zeitstempels mit dem ersten Zugriffstoken in dem ID-Token (100), wobei der Zeitstempel eine maximale Gültigkeitsdauer des ersten Zugriffstokens angibt,
   - im Falle dass ein gültiges zweites Zugriffstoken in dem ID-Token (100) gespeichert ist, Lesen des mit dem gültigen zweiten Zugriffstoken verknüpft gespeicherten Zeitstempels, wobei das zweite Zugriffstoken nur dann gültig ist, wenn der Zeitstempel gültig ist.

8. Computerimplementiertes Verfahren nach Anspruch 7, wobei der Zeitstempel für das Speichern des ersten Zugriffstokens in dem ID-Token (100) auf Basis einer vordefinierten relativen Gültigkeitsdauer erzeugt wird.

9. Computerimplementiertes Verfahren nach einem der Ansprüche 3 bis 6, wobei das Verfahren ferner umfasst,

   - im Falle dass kein gültiges zweites Zugriffstoken in dem ID-Token (100) gespeichert ist, nach dem erfolgreichen Verifizieren der ersten und zweiten Signatur Erzeugen und Verknüpfen eines Nutzungszählers mit dem ersten Zugriffstoken in dem ID-Token (100), wobei der Nutzungszähler dazu konfiguriert ist die Anzahl der Nutzungen des ersten Zugriffstokens zur Freigabe des Zugriffs des Terminals (118) auf das Attribut (112) zu zählen,
   - im Falle dass ein gültiges zweites Zugriffstoken in dem ID-Token (100) gespeichert ist, Lesen des mit dem gültigen zweiten Zugriffstoken verknüpft Nutzungszähler, wobei das gültige zweite Zugriffstoken nur dann gültig ist, wenn der Nutzungszähler einen vordefinierten Grenzwert nicht erreicht hat.

10. Computerimplementiertes Verfahren nach einem der Ansprüche 3 bis 9, wobei das erste Zugriffstoken in einer ersten Nachricht von dem Terminal (118) an das ID-Token (100) gesendet wird, wobei die erste Nachricht ein Wurzelzertifikat umfasst, wobei im Falle dass kein gültiges zweites Zugriffstoken in dem ID-Token (100) gespeichert ist die Authentisierung durch das ID-Token (100) ferner ein Verifizieren des ersten Zugriffstokens über das Wurzelzertifikat mittels eines in dem ID-Token (100) gespeicherten öffentlichen Schlüssels einer Wurzelzertifizierungsstelle umfasst, wobei erst nach erfolgreicher Verifizierung des ersten Zugriffstokens über das Wurzelzertifikat das Speichern des ersten Zugriffstokens und das Freigeben des Zugriffs des Terminals (118) auf das Attribut (112) erfolgt.

11. Computerimplementiertes Verfahren nach einem der vorhergehenden Ansprüche, wobei die Authentisierung des ID-Tokens (100) umfasst:

   - Senden eines öffentlichen Schlüssels des ID-Tokens (100) und eines zu dem öffentlichen Schlüssel zugehörigen Domain-Parameter an das Terminal (118),
   - Berechnen eines dem ID-Token (100) und dem Terminal (118) gemeinsamen zweiten Geheimnisses aus dem privaten Schlüssel des ID-Tokens (100), dem sitzungsgebundenen temporären öffentlichen Schlüssels des Terminals (118) und dem Domain-Parameter durch das ID-Token (100),
   - Berechnen des gemeinsamen zweiten Geheimnisses aus dem öffentlichen Schlüssel des ID-Tokens (100), dem sitzungsgebundenen temporären privaten Schlüssels des Terminals (118) und dem Domain-Parameter durch das Terminal (118),
   - Erzeugen eines zufälligen dritten Geheimnisses durch das ID-Token (100),
   - Senden des zufälligen dritten Geheimnisses an das Terminal (118) und
   - Erzeugen eines symmetrischen Sitzungsschlüssels aus dem dritten Geheimnis und dem gemeinsamen zweiten Geheimnis durch das ID-Token (100) und das Terminal (118),
   wobei die nachfolgende Kommunikation mit dem Zugriff auf das Attribut (112) verschlüsselt mit dem symmetrischen Sitzungsschlüssel erfolgt und

wobei ein Zugriff des Terminals (118) auf das Attribut (112) nur unter der Voraussetzung einer erfolgreichen Authentisierung des ID-Tokens (100) gegenüber dem Terminal (118) erfolgt.

12. Computerimplementiertes Verfahren nach Anspruch 11, wobei entweder der öffentliche Schlüssel des ID-Tokens (100) automatisch gesendet wird oder das ID-Token (100) über mehrere verschiedene öffentliche Schlüssel verfügt, wobei einer dieser verschiedenen öffentlichen Schlüssel als Standardschlüssel definiert ist und durch das ID-Token (100) in Erwiderung auf einen Empfang einer allgemeinen Anforderung eines öffentlichen Schlüssels seitens des Terminals (118) der Standardschlüssel als der öffentliche Schlüssel des ID-Tokens (100) an das Terminal (118) gesendet wird.

13. Computerimplementiertes Verfahren nach einem der Ansprüche 11 oder 12, wobei das Verfahren ferner umfasst:

   - Senden eines Zertifikats des ID-Tokens (100) an das Terminal (118),
   - Verifizieren des Zertifikats, wobei die Authentisierung des ID-Tokens (100) gegenüber dem Terminal (118) unter der Voraussetzung eines positiven Verifizierens des Zertifikats erfolgt.

14. Computerimplementiertes Verfahren nach Anspruch 13, wobei das Verifizieren des Zertifikats des ID-Tokens (100) ferner umfasst:

   - Auslesen einer Sperr-ID aus dem Zertifikat des ID-Tokens (100) durch das Terminal (118),
   - Senden einer Speeranfrage von dem Terminal (118) an den Authentisierungsserver (150),
   - Senden einer Sperrinformation von dem Authentisierungsserver (150) an das Terminal (118), wobei ein Zugriff des Terminals (118) auf das Attribut (112) nur unter der Voraussetzung erfolgt, dass die Sperrinformation anzeigt, dass das ID-Token (100) nicht gesperrt ist.

15. Computerimplementiertes Verfahren nach Anspruch 14, wobei die Speeranfrage die Sperr-ID umfasst, der Authentisierungsserver (150) die Sperr-ID mit einer Sperrliste abgleicht und das Ergebnis des Abgleichs als Sperrinformation an das Terminal (118) sendet, oder wobei der Authentisierungsserver (150) als Sperrinformation eine Sperrliste an das Terminal (118) sendet, welches die Sperr-ID mit der empfangenen Sperrliste abgleicht.

16. System, welches umfasst:

   - einen ID-Token (100) mit einer ersten Kommunikationsschnittstelle (104), einem ersten Prozessor (102) und einem ersten computerlesbaren Speichermedium (106), wobei das erste Speichermedium (106) computerlesbare erste Instruktionen (108) enthält, welche bei Ausführung durch den ersten Prozessor (102) die Durchführung eines Verfahrens nach einem der vorhergehenden Ansprüche bewirken,
   - einen Terminal (118) mit einer zweiten Kommunikationsschnittstelle (122), einem zweiten Prozessor (120) und einem zweiten computerlesbaren Speichermedium (128), wobei das zweite Speichermedium (128) computerlesbare zweite Instruktionen (124) enthält, welche bei Ausführung durch den zweiten Prozessor (120) die Durchführung des Verfahrens nach einem der vorhergehenden Ansprüche bewirken,
   - einen Authentisierungsserver (150) mit einer dritten Kommunikationsschnittstelle (154), einem dritten Prozessor (152) und einem dritten computerlesbaren Speichermedium (156), wobei das dritte Speichermedium (156) computerlesbare dritte Instruktionen (158) enthält, welche bei Ausführung durch den dritten Prozessor (152) die Durchführung des Verfahrens nach einem der vorhergehenden Ansprüche bewirken, sowie
   - eine zugriffsbeschränkte Sicherungseinrichtung (144) und einen Zugangsmanagementserver (130), wobei das Terminal (118) dazu konfiguriert ist, nach Freigabe des Zugriffs des Terminals (118) auf das Attribut (112) das Attribut (112) zu lesen und eine Zugriffsanfrage an den Zugangsmanagementserver (130) zu versenden, wobei die Zugriffsanfrage das Attribut (112) verschlüsselt umfasst, wobei der Zugangsmanagementserver (130) dazu konfiguriert ist, eine Entschlüsselung und Überprüfung des Attributs (112) durchzuführen und im Fall einer erfolgreichen Überprüfung den Zugang zu der Sicherungseinrichtung (144) freizugeben.

17. Sicherheitssystem nach Anspruch 16, wobei die Sicherungseinrichtung (144) ferner eine Zugangskontrolleinrichtung mit einer Verriegelungsanlage umfasst und die Sicherungseinrichtung dazu konfiguriert ist auf eine Freigabe des Zugangs zu der Sicherungseinrichtung hin die Verriegelungsanlage der Zugangskontrolleinrichtung zu entriegeln.

**Claims**

1. A computer-implemented method for controlling access of a terminal (118) to an attribute (112) stored in an ID token (100) and for granting access to an access-restricted security device (144), wherein the method comprises an authentication of the terminal (118) by the ID token (100) and an authentication of the ID token (100) by the terminal (118), wherein the terminal (118) is authenticated by the ID token (100) via an authentication server (150), which comprises a static private key (160) associated with the terminal (118), wherein the authentication via the authentication server (150) comprises:

    - sending a first access token from the terminal (118) to the ID token (100),
    - verifying, by the ID token (100), a first signature of the first access token with a static public key associated with the terminal (118),
    - generating and sending a session-specific temporary public key by the terminal (118) to the ID token (100),
    - generating and sending a random first secret by the ID token (100) to the terminal (118),
    - forwarding the random first secret by the terminal (118) to the authentication server (150) and sending the session-specific temporary public key of the terminal (118) to the authentication server (150),
    - creating a second signature of the random first secret by the authentication server (150) with the static private key (160) associated with the terminal (118) and the session-specific temporary public key of the terminal (118), and sending the second signature to the terminal,
    - forwarding the second signature by the terminal (118) to the ID token (100),
    - verifying the second signature of the random first secret by the ID token (100) with use of the random first secret, the session-specific temporary public key of the terminal (118) and the static public key associated with the terminal (118),
    - once the first and second signature have been successfully verified, granting the terminal (118) access to the attribute (112),
    wherein the terminal (118) accesses the attribute (112) only on the condition that the ID token (100) has been successfully authenticated by the terminal (118),
    - once the terminal (118) has been granted access to the attribute (112), reading the attribute (112) by the terminal (118) and sending an access request to an access management server (130), wherein the access request comprises the attribute (112) in encrypted form,
    - decrypting and verifying the attribute (112) by the access management server (130), wherein the access management server (130), grants access to the security device (144) in the event of successful verification.

2. The computer-implemented method according to claim 1, wherein the first access token is stored as valid access token in the ID token (100) following successful verification of the first and second signature.

3. The computer-implemented method according to either one of the preceding claims, wherein the authentication by the ID token (100) upon receipt of the first access token comprises an automatic checking as to whether a valid second access token matching the received first access token is stored in the ID token (100), wherein, in the case that a valid second access token is stored in the ID token (100), the terminal (118) is granted access to the attribute (112) stored in the ID token (100), wherein, in the case that there is no valid second access token stored in the ID token (100), the terminal (118) is authenticated by the ID token (100) via the authentication server (150).

4. The computer-implemented method according to claim 3, wherein the first access token comprises an access authorisation, and wherein the method also comprises:

    - in the case that there is no valid second access token stored in the ID token (100) and once the first and second signature have been verified, linking and storing the access authorisation with the first access token in the ID token (100), wherein the terminal (118), is granted access to the attribute (112) in accordance with the access authorisation,
    - in the case that a valid second access token is stored in the ID token (100), reading the access authorisation stored and linked with the valid second access token, wherein the terminal (118) is granted access to the attribute (112) in accordance with the access authorisation.

5. The computer-implemented method according to either one of claims 3 or 4, wherein the method also comprises:

    - in the case that there is no valid second access token stored in the ID token (100) and once the first and second signature have been successfully verified, linking and storing the static public key of the terminal (118) with the first access token in the ID token (100), wherein a further communication with the terminal (118) is encrypted with use of the static public key of the terminal (118),
- in the case that a valid second access token is stored in the ID token (100), reading the stored static public key of the terminal (118) linked with the valid second access token, wherein a further communication with the terminal (118) is encrypted with use of the static public key of the terminal (118).

6. The computer-implemented method according to claim 5, wherein the static public key of the terminal (118) is contained in the first access token.

7. The computer-implemented method according to any one of claims 3 to 6, wherein the method also comprises:

- in the case that there is no valid second access token stored in the ID token (100) and once the first and second signature have been verified, generating and linking a timestamp with the first access token in the ID token (100), wherein the timestamp specifies a maximum period of validity of the first access token,
- in the case that a valid second access token is stored in the ID token (100), reading the stored timestamp linked with the valid second access token, wherein the second access token is valid only if the timestamp is valid.

8. The computer-implemented method according to claim 7, wherein the timestamp for storage of the first access token in the ID token (100) is generated on the basis of a predefined relative period of validity.

9. The computer-implemented method according to any one of claims 3 to 6, wherein the method also comprises

- in the case that there is no valid second access token stored in the ID token (100) and once the first and second signature have been successfully verified, generating and linking a use counter with the first access token in the ID token (100), wherein the use counter is configured to count the number of uses of the first access token for granting the terminal (118) access to the attribute (112),
- in the case that a valid second access token is stored in the ID token (100), reading the use counter linked to the valid second access token, wherein the valid second access token is valid only if the use counter has not reached a predefined limit value.

10. The computer-implemented method according to any one of claims 3 to 9, wherein the first access token is sent in a first message from the terminal (118) to the ID token (100), wherein the first message comprises a root certificate, wherein, in the case that there is no valid second access token stored in the ID token (100), the authentication by the ID token (100) also comprises a verification of the first access token via the root certificate by means of a public key of a root certification authority stored in the ID token (100), wherein, only once the first access token has been successfully verified via the root certificate is the first access token stored and the terminal (118) granted access to the attribute (112).

11. The computer-implemented method according to any one of the preceding claims, wherein the authentication of the ID token (100) comprises:

- sending a public key of the ID token (100) and a domain parameter associated with the public key to the terminal (118),
- calculating, by the ID token (100), a second secret, which is common to the ID token (100) and the terminal (118), from the private key of the ID token (100), the session-specific temporary public key of the terminal (118), and the domain parameter,
- calculating, by the terminal (118), the common second secret from the public key of the ID token (100), the session-specific temporary private key of the terminal (118), and the domain parameter,
- generating a random third secret by the ID token (100),
- sending the random third secret to the terminal (118), and
- generating a symmetric session key from the third secret and the common second secret by the ID token (100) and the terminal (118),
wherein the subsequent communication with the access to the attribute (112) is encrypted with the symmetric session key, and
wherein the terminal (118) accesses the attribute (112) only on the condition that the ID token (100) has been successfully authenticated to the terminal (118).

12. The computer-implemented method according to claim 11, wherein either the public key of the ID token (100) is automatically sent or the ID token (100) has a plurality of different public keys, wherein one of these different public keys is defined as standard key, and the standard key is sent, as the public key of the ID token (100), by the ID token (100) to the terminal (118) in response to receipt of a general request for a public key by the terminal (118).

13. The computer-implemented method according to either one of claims 11 or 12, wherein the method also comprises:

    - sending a certificate of the ID token (100) to the terminal (118),
    - verifying the certificate, wherein the ID token (100) is authenticated to the terminal (118) on the condition of a positive verification of the certificate.

14. The computer-implemented method according to claim 13, wherein the verification of the certificate of the ID token (100) also comprises:

    - reading a blocking ID from the certificate of the ID token (100) by the terminal (118),
    - sending a blocking request from the terminal (118) to the authentication server (150),
    - sending a blocking information item from the authentication server (150) the terminal (118), wherein the terminal (118) accesses the attribute (112) only on the condition that the blocking information item indicates that the ID token (100) is not blocked.

15. The computer-implemented method according to claim 14, wherein the blocking request comprises the blocking ID, and the authentication server (150) compares the blocking ID with a blocked list and sends the result of the comparison as blocking information item to the terminal (118), or
wherein the authentication server (150) sends a blocked list to the terminal (118) as blocking information item, and the terminal compares the blocking ID with the received blocked list.

16. A system, comprising:

    - an ID token (100) with a first communications interface (104), a first processor (102), and a first computer-readable storage medium (106), wherein the first storage medium (106) contains computer-readable first instructions (108), which, when executed by the first processor (102), cause a method according to any one of the preceding claims to be carried out,
    - a terminal (118) with a second communications interface (122), a second processor (120), and a second computer-readable storage medium (128), wherein the second storage medium (128) contains computer-readable second instructions (124), which, when executed by the second processor (120), cause the method according to any one of the preceding claims to be carried out,
    - an authentication server (150) with a third communications interface (154), a third processor (152), and a third computer-readable storage medium (156), wherein the third storage medium (156) contains computer-readable third instructions (158), which, when executed by the third processor (152), cause the method according to any one of the preceding claims to be carried out, and
    - an access-restricted security device (144) and an access management server (130),
    wherein the terminal (118) is configured, once the terminal (118) has been granted access to the attribute (112), to read the attribute (112) and to send an access request to the access management server (130), wherein the access request comprises the attribute (112) in encrypted form,
    wherein the access management server (130) is configured to carry out a decryption and checking of the attribute (112), and, in the case of a successful check, to grant access to the security device (144).

17. The security system according to claim 16, wherein the security device (144) also comprises an access control device with a locking facility, and the security device is configured to unlock the locking facility of the access control device in the event that access to the security device is granted.

**Revendications**

1. Procédé mis en œuvre par ordinateur permettant de commander un accès d'un terminal (118) à un attribut (112) stocké dans un jeton d'identification ID (100) et de libérer un accès à un dispositif de sécurité (144) à accès restreint, où le procédé comprend une authentification du terminal (118) par le jeton d'ID (100) et une authentification du jeton d'ID (100) par le terminal (118), où une authentification du terminal (118) par le jeton d'ID (100) a lieu par le biais d'un serveur d'authentification (150), lequel comprend une clé privée statique (160) associée au terminal (118), où l'authentification par le biais du serveur d'authentification (150) comprend :

- l'envoi d'un premier jeton d'accès du terminal (118) au jeton d'ID (100),
- la vérification d'une première signature du premier jeton d'accès avec une clé publique statique associée au terminal (118), par le jeton d'ID (100),
- la création et l'envoi d'une clé publique temporaire reliée à une session par le terminal (118) au jeton d'ID (100),
- la création et l'envoi d'un premier secret aléatoire par le jeton d'ID (100) au terminal (118),
- la retransmission du premier secret aléatoire par le terminal (118) au serveur d'authentification (150) et l'envoi de la clé publique temporaire reliée à la session du terminal (118) au serveur d'authentification (150),
- l'établissement d'une deuxième signature du premier secret aléatoire par le serveur d'authentification (150) avec la clé privée statique (160) associée au terminal (118) et la clé publique temporaire associée à une session du terminal (118), et l'envoi de la deuxième signature au terminal,
- la retransmission de la deuxième signature par le terminal (118) au jeton d'ID (100),
- la vérification de la deuxième signature du premier secret aléatoire par le jeton d'ID (100) moyennant l'emploi du premier secret aléatoire, de la clé publique temporaire reliée à une session du terminal (118) et de la clé publique statique associée au terminal (118),
- après la vérification réussie des première et deuxième signatures, la libération de l'accès du terminal (118) à l'attribut (112),
où l'accès du terminal (118) à l'attribut (112) a lieu uniquement à la condition d'une authentification réussie du jeton d'ID (100) par le terminal (118),
- après la libération de l'accès du terminal (118) à l'attribut (112), la lecture de l'attribut (112) par le terminal (118) et l'envoi d'une demande d'accès à un serveur de gestion d'accès (130), où la demande d'accès comprend l'attribut (112) à l'état crypté,
- le décryptage et la vérification de l'attribut (112) par le serveur de gestion d'accès (130), où le serveur de gestion d'accès (130), dans le cas d'une vérification réussie, libère l'accès au dispositif de sécurité (144).

2. Procédé mis en œuvre par ordinateur selon la revendication 1, dans lequel le premier jeton d'accès est stocké dans le jeton d'ID (100) en tant que jeton d'accès valide suite à une vérification réussie des première et deuxième signatures.

3. Procédé mis en œuvre par ordinateur selon l'une des revendications précédentes, dans lequel l'authentification, par le jeton d'ID (100), suite à la réception du premier jeton d'accès, comprend une vérification automatique qu'un deuxième jeton d'accès valide correspondant au premier jeton d'accès reçu dans le jeton d'ID (100) est stocké, où, dans le cas où un deuxième jeton d'accès valide est stocké dans le jeton d'ID (100), il y a une libération d'un accès du terminal (118) à l'attribut (112) stocké dans le jeton d'ID (100),
où, dans le cas où aucun deuxième jeton d'accès valide n'est stocké dans le jeton d'ID (100), l'authentification du terminal (118) a lieu par le jeton d'ID (100) par le biais du serveur d'authentification (150).

4. Procédé mis en œuvre par ordinateur selon la revendication 3, dans lequel le premier jeton d'accès comprend une autorisation d'accès et où le procédé comprend en outre :

- dans le cas où aucun deuxième jeton d'accès valide n'est stocké dans le jeton d'ID (100), après la vérification réussie des première et deuxième signatures, l'association et le stockage de l'autorisation d'accès au premier jeton d'accès dans le jeton d'ID (100), où une libération de l'accès du terminal (118) à l'attribut (112) a lieu de manière correspondante avec l'autorisation d'accès,
- dans le cas où un deuxième jeton d'accès valide est stocké dans le jeton d'ID (100), la lecture de l'autorisation d'accès stockée associée avec le deuxième jeton d'accès valide, où la libération de l'accès du terminal (118) à l'attribut (112) a lieu de manière correspondante avec l'autorisation d'accès.

5. Procédé mis en œuvre par ordinateur selon l'une des revendications 3 ou 4, où le procédé comprend en outre :

- dans le cas où aucun deuxième jeton d'accès valide n'est stocké dans le jeton d'ID (100), après la vérification réussie des première et deuxième signatures, l'association et le stockage de la clé publique statique du terminal (118) avec le premier jeton d'accès dans le jeton d'ID (100), où une nouvelle communication a lieu avec le terminal (118) de manière cryptée moyennant l'emploi de la clé publique statique du terminal (118),
- dans le cas où un deuxième jeton d'accès valide est stocké dans le jeton d'ID (100), la lecture de la clé publique statique du terminal (118) stockée associée avec le deuxième jeton d'accès, où une nouvelle communication a lieu avec le terminal (118) de manière cryptée moyennant l'emploi de la clé publique statique du terminal (118).

**6.** Procédé mis en œuvre par ordinateur selon la revendication 5, dans lequel la clé publique statique du terminal (118) est contenue dans le premier jeton d'accès.

**7.** Procédé mis en œuvre par ordinateur selon l'une des revendications 3 à 6, où le procédé comprend en outre :

- dans le cas où aucun deuxième jeton d'accès valide n'est stocké dans le jeton d'ID (100), après la vérification réussie des première et deuxième signatures, la création et l'association d'un horodatage avec le premier jeton d'accès dans le jeton d'ID (100), où l'horodatage indique une durée de validité maximale du premier jeton d'accès,
- dans le cas où un deuxième jeton d'accès valide est stocké dans le jeton d'ID (100), la lecture de l'horodatage stocké associé avec le deuxième jeton d'accès valide, où le deuxième jeton d'accès est uniquement valide lorsque l'horodatage est valide.

**8.** Procédé mis en œuvre par ordinateur selon la revendication 7, dans lequel l'horodatage pour le stockage du premier jeton d'accès dans le jeton d'ID (100) est créé sur la base d'une durée de validité relative prédéfinie.

**9.** Procédé mis en œuvre par ordinateur selon l'une des revendications 3 à 6, où le procédé comprend en outre :

- dans le cas où aucun deuxième jeton d'accès valide n'est stocké dans le jeton d'ID (100), après la vérification réussie des première et deuxième signatures, la création et l'association d'un compteur d'utilisations avec le premier jeton d'accès dans le jeton d'ID (100), où le compteur d'utilisations est conçu pour compter le nombre des utilisations du premier jeton d'accès pour la libération de l'accès du terminal (118) à l'attribut (112),
- dans le cas où un deuxième jeton d'accès valide est stocké dans le jeton d'ID (100), la lecture du compteur d'utilisations associé avec le deuxième jeton d'accès valide, où le deuxième jeton d'accès valide est uniquement valide lorsque le compteur d'utilisations n'a pas atteint une valeur limite prédéfinie.

**10.** Procédé mis en œuvre par ordinateur selon l'une des revendications 3 à 9, dans lequel le premier jeton d'accès est envoyé dans un premier message du terminal (118) au jeton d'ID (100), où le premier message comprend un certificat racine, où, dans le cas où aucun deuxième jeton d'accès valide n'est stocké dans le jeton d'ID (100), l'authentification par le jeton d'ID (100) comprend en outre une vérification du premier jeton d'accès par le biais du certificat racine au moyen d'une clé publique stockée dans le jeton d'ID (100) d'une position de certification racine, où uniquement après une vérification réussie du premier jeton d'accès par le biais du certificat racine, le stockage du premier jeton d'accès et la libération de l'accès du terminal (118) à l'attribut (112) ont lieu.

**11.** Procédé mis en œuvre par ordinateur selon l'une des revendications précédentes, dans lequel l'authentification du jeton d'ID (100) comprend :

- l'envoi d'une clé publique du jeton d'ID (100) et d'un paramètre de domaine correspondant à la clé publique, au terminal (118),
- le calcul d'un deuxième secret commun au jeton d'ID (100) et au terminal (118) à partir de la clé privée du jeton d'ID (100), de la clé publique temporaire reliée à une session du terminal (118) et du paramètre de domaine par le jeton d'ID (100),
- le calcul du deuxième secret commun à partir de la clé publique du jeton d'ID (100), de la clé privée temporaire reliée à une session du terminal (118) et du paramètre de domaine par le terminal (118),
- la création d'un troisième secret aléatoire par le jeton d'ID (100),
- l'envoi du troisième secret aléatoire au terminal (118) et
- la création d'une clé de session symétrique à partir du troisième secret et du deuxième secret commun par le jeton d'ID (100) et le terminal (118),
où la communication ultérieure avec l'accès à l'attribut (112) a lieu de manière cryptée avec la clé de session symétrique, et
où un accès du terminal (118) à l'attribut (112) n'a lieu qu'à la condition d'une authentification réussie du jeton d'ID (100) vis-à-vis du terminal (118).

**12.** Procédé mis en œuvre par ordinateur selon la revendication 11, dans lequel la clé publique du jeton d'ID (100) est envoyée automatiquement ou le jeton d'ID (100) dispose de plusieurs clés publiques différentes, où une de ces clés publiques différentes est définie comme clé standard et la clé standard est envoyée par le jeton d'ID (100) en tant que clé publique du jeton d'ID (100) au terminal (118) en réponse à la réception d'une demande générale d'une clé publique de la part du terminal (118).

**13.** Procédé mis en œuvre par ordinateur selon l'une des revendications 11 ou 12, où le procédé comprend en outre :

- l'envoi d'un certificat du jeton d'ID (100) au terminal (118),
- la vérification du certificat, où l'authentification du jeton d'ID (100) vis-à-vis du terminal (118) a lieu à la condition d'une vérification positive du certificat.

**14.** Procédé mis en œuvre par ordinateur selon la revendication 13, dans lequel la vérification du certificat du jeton d'ID (100) comprend en outre :

- la lecture d'un ID de blocage à partir du certificat du jeton d'ID (100) par le terminal (118),
- l'envoi d'une demande de blocage par le terminal (118) au serveur d'authentification (150),
- l'envoi d'une information de blocage du serveur d'authentification (150) au terminal (118), où un accès du terminal (118) à l'attribut (118) n'a lieu qu'à la condition que l'information de blocage indique que le jeton d'ID (100) n'est pas bloqué.

**15.** Procédé mis en œuvre par ordinateur selon la revendication 14, dans lequel la demande de blocage comprend l'ID de blocage, le serveur d'authentification (150) compare l'ID de blocage avec une liste de blocage et envoie le résultat de la comparaison en tant qu'information de blocage au terminal (118), ou
dans lequel le serveur d'authentification (150) envoie une liste de blocage en tant qu'information de blocage au terminal (118), lequel compare l'ID de blocage avec la liste de blocage reçue.

**16.** Système, lequel comprend :

- un jeton d'ID (100) doté d'une première interface de communication (104), d'un premier processeur (102) et d'un premier support de stockage (106) lisible par ordinateur, où le premier support de stockage (106) contient des premières instructions (108) lisibles par ordinateur, lesquelles, lors de l'exécution par le premier processeur (102) provoquent l'exécution d'un procédé selon l'une des revendications précédentes,
- un terminal (118) doté d'une deuxième interface de communication (122), d'un deuxième processeur (120) et d'un deuxième support de stockage (128) lisible par ordinateur, où le deuxième support de stockage (128) contient des deuxièmes instructions (124) lisibles par ordinateur, lesquelles, lors de l'exécution par le deuxième processeur (120), provoquent l'exécution d'un procédé selon l'une des revendications précédentes,
- un serveur d'authentification (150) doté d'une troisième interface de communication (154), d'un troisième processeur (152) et d'un troisième support de stockage (156) lisible par ordinateur, où le troisième support de stockage (156) contient des troisièmes instructions (158) lisibles par ordinateur, lesquelles, lors de l'exécution par le troisième processeur (152), provoquent l'exécution d'un procédé selon l'une des revendications précédentes, ainsi
- qu'un dispositif de sécurité (144) à l'accès restreint et un serveur de gestion d'accès (130),
où le terminal (118) est conçu pour, après la libération de l'accès du terminal (118) à l'attribut (112, lire l'attribut (112) et envoyer une demande d'accès au serveur de gestion d'accès (130), où la demande d'accès comprend l'attribut (112) à l'état crypté, où le serveur de gestion d'accès (130) est conçu pour exécuter un décryptage et une vérification de l'attribut (112) et dans le cas d'une vérification réussie, libérer l'accès au dispositif de sécurité (144).

**17.** Système de sécurité selon la revendication 16, dans lequel le dispositif de sécurité (144) comprend en outre un dispositif de commande d'accès doté d'une unité de verrouillage, et le dispositif de sécurité est conçu pour, suite à une libération de l'accès au dispositif de sécurité, déverrouiller l'unité de verrouillage du dispositif de commande d'accès.

**Fig. 1**

200 — Terminal Authentifizierung

202 — ID-Token Authentifizierung

204 — Lesen Attribut

206 — Freigabe?

Fig. 2

Empfang permanentes
Zertifikat des Terminals

Ableiten Hash-Wert

Gültiger Hash
gespeichert ?

Ja

Nein

Verifizierung
permanentes Zertifikat

Ableiten erste Signatur

Signatur gültig ?

Nein

Ja

Empfang sitzgebundener
Schlüssel

Erzeugen und Senden
Geheimnis

Weiterleiten Geheimnis,
Senden sitzungsgebundener
Schlüssel

Erzeugen und Senden
zweite Signatur

Weiterleiten zweite
Signatur

Empfang und Verifizierung
zweite Signatur

Speichern Hash-Wert,
Metadaten,
permanenter
öffentlicher Schlüssel,
Zeitstempel

Freigabe Zugriff
auf Attribut

Senden permanentes
Zertifikat des ID-Tokens

Verifizierung permanentes
Zertifikat

Senden öffentlicher
Schlüssel ID-Token und
Domain Parameter

Berechnen zweites
Geheimnis

Erzeugen drittes
Geheimnis

Senden drittes
Geheimnis an Terminal

Erzeugung
Sitzungsschlüssel

Verschlüsselter Zugriff
auf Attribut

Fig. 3

100 — ID-Token

118 — Terminal
118' — Lesemodul
118'' — Steuermodul

150 — Authentisierungs-server

130 — Zugangs-management-server

**Terminal-Authentisierung**

400 — ID-Token?

402 — ID-Token?

404 — UID

406 — UID

407 — Zertifikat

408 — Verifizieren Zertifikat /
409 — Überprüfen Hash-Wert

Erzeugen $(\widetilde{SK_{PCD}}, \widetilde{PK_{PCD}})$, Sitzungs-ID $l_{UID}$

410 — Comp$(\widetilde{PK_{PCD}})$

411 — Erzeugen
412 — $r_{PICC}$ — Challenge $r_{PICC}$

413 — Comp$(\widetilde{PK_{PCD}})$, $l_{UID}$, $r_{PICC}$

414 — 

$$\mathrm{Sign}\begin{pmatrix} \widetilde{SK_{PCD}}, r_{PICC} \ \| \\ \mathrm{Comp}(\widetilde{PK_{PCD}}) \ \| \\ l_{UID} \end{pmatrix}$$

416 — Response $s_{PCD}$

418 — Response $s_{PCD}$

420 — Verifizieren $s_{PCD}$

422 — Freigabe Zugriff, Zertifikat

424 — Sperranfrage

426 — Sperrinformation

428 — Verifizieren Zertifikat

430 — Chip-Authentisierung

432 — Leseanfrage Attribut

434 — Attribut

436 — Attribut

438 — 

**Überprüfung Attribut**

440 — Freigabe Zugang

442 — Freigabe Zugang

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **KAIN M. et al.** *SAML 2.0, ein Tutorium - Teil 1: Theorie*